# EUROPÄISCHE PATENTSCHRIFT

(11) **EP 4 065 063 B1**
(45) Veröffentlichungstag und Bekanntmachung des Hinweises auf die Patenterteilung: **01.11.2023**
(21) Anmeldenummer: 20811411.6
(22) Anmeldetag: 27.11.2020
(51) Int. Cl.: A61G 15/14, B01D 53/64, A61M 16/00

(54) **AUFFANGVORRICHTUNG ZUM AUFFANGEN UND ABSAUGEN VON QUECKSILBERBELASTETER LUFT**
COLLECTION DEVICE FOR COLLECTING AND SUCTIONING OFF MERCURY-LOADED AIR
DISPOSITIF DE COLLECTE POUR COLLECTER ET ASPIRER DE L'AIR CHARGÉ DE MERCURE

(30) Priorität: 28.11.2019 CH 15072019
(43) Veröffentlichungstag der Anmeldung: 05.10.2022
(73) Patentinhaber: Zehm, Michael, 3780 Gstaad (CH)
(72) Erfinder: Zehm, Michael, 3780 Gstaad (CH)
(74) Vertreter: Keller Schneider Patent- und Markenanwälte AG
(86) Internationale Anmeldenummer: PCT/EP2020/083718
(87) Internationale Veröffentlichungsnummer: WO 2021/105418

(56) Entgegenhaltungen:
- WO-A2-2004/010892
- DE-A1- 19 503 780
- US-A1- 2013 252 524

## Beschreibung

### Technisches Gebiet

Die Erfindung betrifft eine Auffangvorrichtung zum Auffangen und Absaugen von quecl<silberbelasteter Luft, insbesondere quecl<silberbelasteter Raum- und Atemluft, aus einer Umgebung eines Kopfs eines Patienten während einer zahnärztlichen Behandlung des Patienten, wobei die Auffangvorrichtung einen Auffangvorrichtungsinnenraum, einen mit dem Auffangvorrichtungsinnenraum verbundenen Einlass zum Einlassen von Luft in den Auffangvorrichtungsinnenraum sowie einen mit dem Auffangvorrichtungsinnenraum verbundenen Anschluss zum Anschliessen einer Saugvorrichtung zum Absaugen der Luft aus dem Auffangvorrichtungsinnenraum aufweist. Weiter betrifft die Erfindung eine Anordnung umfassend eine solche Auffangvorrichtung und eine Saugvorrichtung.

### Stand der Technik

Auffangvorrichtungen gemäss dem eingangs genannten technischen Gebiet sowie Anordnungen umfassend eine solche Auffangvorrichtung und eine Saugvorrichtung sind bekannt. Solche Vorrichtungen sind insbesondere für zahnärztliche Behandlungen wie beispielsweise Amalgam-Behandlungen oder die Entfernung von Zahnfüllungen aus Amalgam, d.h. die Entfernung von Zahnfüllungen aus einer quecksilberhaltigen Metalllegierung, gedacht, bei welchen Quecl<silberatome, Quecksilber enthaltende Moleküle und/oder Quecksilber enthaltende Aerosole freigesetzt werden und damit quecl<silberbelastete Luft im Behandlungsraum entsteht und vom Patienten sowie dem zahnärztlichen Personal eingeatmet werden.

Ein Beispiel einer solchen Vorrichtung ist in der DE 195 03 780 A1 von Thomas Winfried Jordan beschrieben. Diese Vorrichtung dient zur Reduzierung inhalatorischer Belastungen durch Schwermetalldämpfe, insbesondere Quecksilberdampf und Keimen bei Patienten und zahnärztlichem Personal. Bei dieser Vorrichtung ist eine Aerosolglocl<e um den Mundhöhlenbereich des Patienten angeordnet und durch eine Anströmleitung mit einem im Zahnarztstuhl angeordneten Sauggebläse verbunden. Weiter umfasst die Vorrichtung eine Abströmleitung sowie Filter, welche zwischen der Anströmleitung und der Abströmleitung angeordnet sind.

Weitere, ähnliche Vorrichtungen sind in der EP 0 498 782 B1 der Boliden Contech AB, der WO 94/00220 A1 der AI<tiebolaget Swedovo und der DE 101 30 721 A1 von Li-Chou Lu beschrieben.

US 2013/252524 A1 und WO 2004/010892 A2 offenbaren ebenfalls Auffangvorrichtungen.

Alle diese Vorrichtungen haben den Nachteil, dass sie die quecl<silberbelastete Luft, insbesondere quecl<silberbelastete Raum- und Atemluft, während der zahnärztlichen Behandlung eines Patienten nur ungenügend aus der Umgebung des Kopfs des Patienten auffangen und absaugen können. Damit verbleibt bei zahnärztlichen Behandlungen quecl<silberbelastete Luft im Behandlungsraum und wird vom Patienten sowie dem zahnärztlichen Personal eingeatmet, was für die Patienten und das zahnärztliche Personal gesundheitliche Risiken bedeutet.

### Darstellung der Erfindung

Aufgabe der Erfindung ist es, eine dem eingangs genannten technischen Gebiet zugehörende Auffangvorrichtung zum Auffangen und Absaugen von quecksilberbelasteter Luft, insbesondere quecksilberbelasteter Raum- und Atemluft, aus einer Umgebung des Kopfs eines Patienten während einer zahnärztlichen Behandlung des Patienten zu schaffen, welche ein effizienteres Auffangen und Absaugen von quecksilberbelasteter Luft, insbesondere quecksilberbelasteter Raum- und Atemluft, bzw. Raum- und Atemluft mit durch die zahnärztliche Behandlung entstandenen Quecksilberatomen, Quecksilber enthaltenden Molekülen und/oder Quecksilber enthaltenden Aerosolen, aus der Umgebung des Kopfs des Patienten während der zahnärztlichen Behandlung des Patienten ermöglicht.

Die Lösung der Aufgabe ist durch die Merkmale des Anspruchs 1 definiert. Gemäss der Erfindung bildet in einer Arbeitsorientierung der Auffangvorrichtung der Einlass eine nach oben zeigende Öffnung, durch welche Luft von ausserhalb der Auffangvorrichtung in den Auffangvorrichtungsinnenraum absinken kann, wobei die Auffangvorrichtung einen Ausschnitt, insbesondere einen Halsausschnitt, aufweist, welcher sich in der Arbeitsorientierung der Auffangvorrichtung seitlich in einer als Ausschnittseite bezeichneten Seite der Auffangvorrichtung befindet und von einer Oberseite der Auffangvorrichtung zu einer Unterseite der Auffangvorrichtung reicht, sodass die Auffangvorrichtung in der Arbeitsorientierung um einen Hals des Patienten angeordnet werden kann, sodass sich der Hals des Patienten zumindest teilweise in dem Ausschnitt befindet, wobei der Anschluss im Auffangvorrichtungsinnenraum einen Übergangsbereich aufweist, in welchem sich der Anschluss in den Auffangvorrichtungsinnenraum hinein aufweitet, wobei der Übergangsbereich mit einer Abdeckung abgedeckt ist, welche rotationssymmetrisch angeordnete Ausnehmungen aufweist, wobei die Ausnehmungen auf die Abdeckung bezogen dem Zentrum der Abdeckung am nächsten liegende Seitenwände, sowie dem Zentrum der Abdeckung abgewandt liegende Seitenwände aufweist, wobei die Ausnehmungen auf die Abdeckung bezogen im Wesentlichen radial verlaufende Seitenwände aufweist, die jeweils die innenliegende Seitenwand mit der aussenliegenden Seitenwand der jeweiligen Ausnehmung verbinden, wobei die im Wesentlichen radial verlaufenden Seitenwände jeweils zu einer Rotationssymmetrieachse der Anordnung der Ausnehmungen angewinkelt sind und wobei von der Rotationssymmetrieachse der Anordnung der Ausnehmungen zur jeweiligen im Wesentlichen radial verlaufenden Seitenwand betrachtet die im Wesentlichen radial verlaufenden Seitenwände von unten von einer ersten Seite nach oben zur anderen Seite geneigt sind, um im angesogenen Luftstrom ein Wirbel zu erzeugen, damit Luft aus dem Auffangvorrichtungsinnenraum effizienter abgesaugt werden kann.

Wenn somit die Auffangvorrichtung in der Arbeitsorientierung ausgerichtet ist, ist der Einlass eine nach oben zeigende Öffnung, durch welche Luft von ausserhalb der Auffangvorrichtung in den Auffangvorrichtungsinnenraum absinken kann. Vorzugsweise weist die Auffangvorrichtung dabei einen zur Auffangvorrichtung fix ausgerichteten Ausrichtungsvektor auf, welcher in eine Richtung zeigt und durch seine Ausrichtung im Raum eine Ausrichtung der Auffangvorrichtung angibt. Bevorzugt ist dieser Ausrichtungsvektor in der Arbeitsorientierung der Auffangvorrichtung im Wesentlichen nach oben ausgerichtet. D.h. in der Arbeitsorientierung der Auffangvorrichtung beginnt der Ausrichtungsvel<tor bevorzugt an der Spitze eines rotationssymmetrisch um eine vertikale Achse ausgerichteten und sich nach oben öffnenden Konus und zeigt innerhalb dieses Konus nach oben. Dabei ist ein zwischen der vertikalen Achse und einer Mantelfläche des Konus gemessener Öffnungswinkel des Konus bevorzugt 45°, besonders bevorzugt 30°, ganz besonders bevorzugt 20°. Bevorzugt ist in jeder möglichen Orientierung des Ausrichtungsvel<tors innerhalb des Konus der Einlass eine nach oben zeigende Öffnung, durch welche Luft von ausserhalb der Auffangvorrichtung in den Auffangvorrichtungsinnenraum absinken kann. Somit befindet sich die Auffangvorrichtung in der Arbeitsorientierung, wenn sich ihr Ausrichtungsvel<tor innerhalb des Konus befindet.

Gemäss der erfindungsgemässen Lösung weist die Auffangvorrichtung einen Ausschnitt, insbesondere einen Halsausschnitt, auf, welcher sich in der Arbeitsorientierung der Auffangvorrichtung seitlich in einer als Ausschnittseite bezeichneten Seite der Auffangvorrichtung befindet und von einer Oberseite der Auffangvorrichtung zu einer Unterseite der Auffangvorrichtung reicht, sodass die Auffangvorrichtung in der Arbeitsorientierung um einen Hals des Patienten angeordnet werden kann, sodass sich der Hals des Patienten zumindest teilweise in dem Ausschnitt bzw. Halsausschnitt befindet. Dabei ist die Oberseite der Auffangvorrichtung in der Arbeitsorientierung der Auffangvorrichtung eine nach oben gewandte Seite der Auffangvorrichtung. Weiter ist die Unterseite der Auffangvorrichtung in der Arbeitsorientierung der Auffangvorrichtung eine nach unten gewandte Seite der Auffangvorrichtung. Zudem ist die Ausschnittseite der Auffangvorrichtung in der Arbeitsorientierung der Auffangvorrichtung eine im Wesentlichen horizontal zur Seite gewandte Seite der Auffangvorrichtung.

Da erfindungsgemäss in der Arbeitsorientierung der Auffangvorrichtung der Einlass eine nach oben zeigende Öffnung bildet, durch welche Luft von ausserhalb der Auffangvorrichtung in den Auffangvorrichtungsinnenraum und damit in die Auffangvorrichtung absinken kann, bildet die Auffangvorrichtung ein Auffanggefäss zum Auffangen von Gasen, insbesondere Gasen mit Aerosolen, deren spezifische Dichte schwerer als die spezifische Dichte von Luft ist. Somit ist die Auffangvorrichtung besonders zum Auffangen von quecksilberbelasteter Luft, d.h. Luft, welche Quecksilberatome, Quecksilber enthaltende Moleküle und/oder Quecksilber enthaltende Aerosole enthält, geeignet, weil Quecl<silberatome, Quecksilber enthaltende Moleküle sowie Quecksilber enthaltende Aerosole schwerer als Luft sind und somit durch den Einlass in den Auffangvorrichtungsinnenraum und damit in die Auffangvorrichtung absinken, wenn sich die Auffangvorrichtung in der Arbeitsorientierung befindet. Dabei wird die quecl<silberbelastete Luft von der Auffangvorrichtung besonders effizient aufgefangen, weil die Auffangvorrichtung in der Arbeitsorientierung um den Hals des Patienten angeordnet werden kann und damit der Einlass während der zahnärztlichen Behandlung unterhalb des Unterkiefers des Patienten positioniert werden kann. Da der grösste Teil der quecl<silberbelasteten Luft bei einer zahnärztlichen Behandlung aus einem Mundraum des Patienten entlang dem Unterl<iefer des Patienten nach unten strömt, kann somit durch die Auffangvorrichtung die quecl<silberbelastete Luft, insbesondere quecl<silberbelastete Raum- und Atemluft, während der zahnärztlichen Behandlung des Patienten optimal aus der Umgebung des Kopfs des Patienten aufgefangen und abgesaugt werden.

Die erfindungsgemässe Aufgabe wird weiter durch eine Anordnung mit einer Saugvorrichtung und einer erfindungsgemässen Auffangvorrichtung gelöst. Dabei umfasst die Saugvorrichtung wenigstens folgende Elemente:
a) einen Saugvorrichtungsinnenraum,
b) einen mit dem Saugvorrichtungsinnenraum verbundenen Auslass zum Auslassen von Luft aus dem Saugvorrichtungsinnenraum in eine Umgebung der Saugvorrichtung,
c) einen mit dem Saugvorrichtungsinnenraum verbundenen ersten Stutzen zum Einlassen von Luft in den Saugvorrichtungsinnenraum,
d) ein an dem ersten Stutzen anschliessbares oder angeschlossenes, flexibles oder festes Rohr zum Einlassen von Luft durch das an den ersten Stutzen angeschlossene Rohr und den ersten Stutzen in den Saugvorrichtungsinnenraum, und
e) eine Luftbewegvorrichtung, insbesondere eine Saugturbine oder einen Ventilator zum Erzeugen eines Unterdrucks zumindest in einem dem ersten Stutzen anliegenden Einlassbereich des Saugvorrichtungsinnenraums, um Luft durch das Rohr und den ersten Stutzen in den Saugvorrichtungsinnenraum zu saugen und durch den Auslass aus dem Saugvorrichtungsinnenraum auszulassen.

Dabei ist das Rohr an dem Anschluss der Auffangvorrichtung anschliessbar oder angeschlossen, um Luft aus dem Auffangvorrichtungsinnenraum in den Saugvorrichtungsinnenraum abzusaugen.

Dabei ist irrelevant, wie das Rohr, welches flexibel oder fest sein kann, ausgebildet ist. So kann das Rohr beispielsweise mehrere feste Teile aufweisen, welche durch flexible Gelenke miteinander verbunden sind, sodass das Rohr und damit die am Rohr angeschlossene Auffangvorrichtung im Raum verschwenkt werden kann. Genauso kann das Rohr aber beispielsweise auch über seine ganze Länge flexibel und damit ein Schlauch sein.

Weiter ist irrelevant, wie die Luftbewegvorrichtung genau ausgebildet ist. So kann sie beispielsweise eine Saugturbine oder ein Ventilator sein. Eine Luftbewegvorrichtung ist bevorzugt eine Vorrichtung, welche ein gasförmiges Medium von einer ersten Seite der Luftbewegvorrichtung auf eine zweite Seite der Luftbewegvorrichtung befördert und dadurch auf der ersten Seite der Luftbewegvorrichtung einen Unterdruck erzeugt und damit auf dieser ersten Seite der Luftbewegvorrichtung Gas und insbesondere Luft ansaugt. Falls die Luftbewegvorrichtung ein Ventilator ist, kann der Ventilator beispielsweise einen Axialventilator, einen Diagonalventilator, einen Radial- oder Zentrifugalventilator, oder einen Tangential- oder Querstromventilator sein.

Unabhängig von der Konstruktionsweise der Luftbewegvorrichtung wird der Vorteil erreicht, dass während der zahnärztlichen Behandlung des Patienten entstehende quecl<silberbelastete Luft, insbesondere quecl<silberbelastete Raum- und Atemluft, optimal aus der Umgebung des Kopfs des Patienten aufgefangen und abgesaugt werden kann.

Vorzugsweise umgreift die Auffangvorrichtung den Hals auf zwei oder drei Seiten, wenn sie in der Arbeitsorientierung um den Hals des Patienten angeordnet ist. Vorzugsweise kann dabei der Hals des Patienten zu zumindest 30% in dem Ausschnitt bzw. Halsausschnitt angeordnet werden. Dies hat den Vorteil, dass während der zahnärztlichen Behandlung des Patienten entstehende quecl<silberbelastete Luft, insbesondere quecl<silberbelastete Raum- und Atemluft, optimal aus der Umgebung des Kopfs des Patienten aufgefangen und abgesaugt werden kann.

Bevorzugt ist der Ausschnitt bzw. Halsausschnitt anatomisch geformt, damit die Auffangvorrichtung optimal um den Hals des Patienten gelegt werden kann, insbesondere um den Hals auf zwei oder drei Seiten zu umgreifen.

Vorteilhafterweise weist die Auffangvorrichtung einen Randbereich auf, welcher an der Ausschnittseite anliegt, entlang dem Ausschnitt bzw. Halsausschnitt, insbesondere entlang dem gesamten Ausschnitt bzw. Halsausschnitt, verläuft und sich in der Arbeitsorientierung der Auffangvorrichtung auf der Oberseite der Auffangvorrichtung befindet, wobei sich der Einlass in dem Randbereich entlang dem Ausschnitt bzw. Halsausschnitt erstreckt, sodass sich in der Arbeitsorientierung der Auffangvorrichtung der Einlass um den Hals des Patienten erstreckt, wenn die Auffangvorrichtung um den Hals des Patenten angeordnet ist. Dies hat den Vorteil, dass bei der zahnärztlichen Behandlung die aus dem Mundraum des Patienten entlang dem Unterl<iefer des Patienten nach unten strömende, quecl<silberbelastete Luft direkt in den Einlass und damit in den Auffangvorrichtungsinnenraum der Auffangvorrichtung strömt.

Bevorzugt reicht in der Arbeitsorientierung der Auffangvorrichtung der Einlass in dem Randbereich von vertikal oben betrachtet näher als 1 cm, besonders bevorzugt näher als 0.5 cm an eine seitliche Aussenkante der Auffangvorrichtung. D.h. ein Rand der Auffangvorrichtung, welcher den Einlass im Randbereich begrenzt, ist bevorzugt schmaler als 1 cm, besonders bevorzugt schmaler als 0.5 cm. Dies hat den Vorteil, dass der Einlass bis nahe an die seitliche Aussenkante der Auffangvorrichtung reicht, womit die entlang dem Unterl<iefer des Patienten nach unten strömende, quecl<silberbelastete Luft mit der Auffangvorrichtung optimal aufgefangen wird.

Alternativ dazu besteht auch die Möglichkeit, dass der Randbereich von vertikal oben betrachtet 1 cm oder breiter ist.

Vorteilhafterweise weist die Auffangvorrichtung eine Rückwand auf, welche in der Arbeitsorientierung der Auffangvorrichtung von der Ausschnittseite her in den Ausschnitt betrachtet hinter dem Einlass angeordnet ist und damit den Einlass auf der der Ausschnittseite gegenüberliegenden Seite der Auffangvorrichtung begrenzt.

Vorzugsweise reicht die Rückwand in der Arbeitsorientierung der Auffangvorrichtung mindestens 4 cm weiter nach oben als der Randbereich, welcher an der Ausschnittseite anliegt und entlang dem Ausschnitt bzw. Halsausschnitt, insbesondere entlang dem gesamten Ausschnitt bzw. Halsausschnitt, verläuft und sich in der Arbeitsorientierung der Auffangvorrichtung auf der Oberseite der Auffangvorrichtung befindet. Dies hat den Vorteil, dass im Gebrauch der Auffangvorrichtung aus der Mundhöhle und der Nase des Patienten ausströmende Luft, insbesondere quecl<silberbelastete Luft, von der Vorrichtung optimal zum Einlass geführt wird, um abgesaugt zu werden.

Alternativ dazu besteht aber auch die Möglichkeit, dass die Rückwand der Auffangvorrichtung in der Arbeitsorientierung der Auffangvorrichtung weniger als 4 cm weiter nach oben als der Randbereich reicht, welcher an der Ausschnittseite anliegt und entlang dem Ausschnitt bzw. Halsausschnitt, insbesondere entlang dem gesamten Ausschnitt bzw. Halsausschnitt, verläuft und sich in der Arbeitsorientierung der Auffangvorrichtung auf der Oberseite der Auffangvorrichtung befindet.

Vorteilhafterweise ist die Rückwand in der Arbeitsorientierung der Auffangvorrichtung von der Ausschnittseite her in den Ausschnitt betrachtet asymmetrisch, indem sie auf der einen Seite höher als auf der anderen Seite ist. Dies hat den Vorteil, dass der behandelnde Zahnarzt auf der weniger hohen Seite nicht durch die Rückwand an der Behandlung des Patienten gehindert ist.

Alternativ dazu besteht aber auch die Möglichkeit, dass die Rückwand in der Arbeitsorientierung der Auffangvorrichtung von der Ausschnittseite her in den Ausschnitt betrachtet symmetrisch ist, indem sie auf der beiden Seiten gleich hoch ist.

Vorteilhafterweise weist der Ausschnitt bzw. Halsausschnitt in der Arbeitsorientierung der Auffangvorrichtung in der Ausschnittseite horizontal entlang der Ausschnittseite gemessen eine Breite von 70 mm bis 190 mm auf. Bevorzugt wird dabei die Breite entlang der Ausschnittseite gemessen, indem eine gerade Linie an die Ausschnittseite angelegt wird, wobei die gerade Linie die Ausschnittseite auf einer ersten Seite des Ausschnitts tangential berührt und die Ausschnittseite auf einer zweiten Seite des Ausschnitts tangential berührt, und senkrecht zum Ausrichtungsvel<tor ausgerichtet ist. Dabei wird bevorzugt die Breite des Ausschnitts in dem Ausschnitt entlang einer Messlinie gemessen, welche von der geraden Linie in eine Richtung senkrecht zur geraden Linie und senkrecht zum Ausrichtungsvel<tor um 5 cm in den Ausschnitt hinein verschoben ist und parallel zur geraden Linie verläuft.

Eine Breite des Ausschnitts bzw. Halsausschnitts in einem Bereich von 70 mm bis 190 mm hat den Vorteil, dass die Auffangvorrichtung in der Arbeitsorientierung passend an den Hals des Patienten anliegend um den Hals des Patienten angeordnet werden kann.

Alternativ dazu kann der Ausschnitt bzw. Halsausschnitt auch eine grössere Breite als 190 mm oder eine kleinere Breite als 70 mm aufweisen. Eine grössere Breite ist dabei vorteilhaft für Patienten mit einem kräftigeren Hals, während eine kleinere Breite für Patienten wie kleinere Kinder vorteilhaft ist.

Bevorzugt reicht der Ausschnitt bzw. Halsausschnitt in der Arbeitsorientierung der Auffangvorrichtung 100 mm bis 160 mm, insbesondere etwa 140 mm, tief in die Auffangvorrichtung hinein. Bevorzugt ist diese Tiefe ab der geraden Linie gemessen, welche an die Ausschnittseite angelegt ist und die Ausschnittseite auf einer ersten Seite des Ausschnitts tangential berührt und die Ausschnittseite auf einer zweiten Seite des Ausschnitts tangential berührt und senkrecht zum Ausrichtungsvel<tor ausgerichtet ist. Eine derartige Tiefe des Ausschnitts bzw. Halsausschnitts hat den Vorteil, dass die Auffangvorrichtung in der Arbeitsorientierung passend um den Hals des Patienten angeordnet werden kann und damit der Einlass während der zahnärztlichen Behandlung optimal passend unterhalb des Unterkiefers des Patienten positioniert werden kann.

Alternativ dazu kann der Ausschnitt bzw. Halsausschnitt auch eine Tiefe von weniger als 100 mm oder mehr als 160 mm aufweisen.

Vorzugsweise erstreckt sich der Einlass über eine Fläche von mindestens 200 cm². Dies hat den Vorteil, dass der Einlass eine ausreichend grosse Fläche einnimmt, um möglichst viel der bei der zahnärztlichen Behandlung entstehenden, quecl<silberbelasteten Luft aufzunehmen und absaugen zu können.

Alternativ dazu besteht aber auch die Möglichkeit, dass sich der Einlass nur über eine Fläche von weniger als 200 cm² erstreckt.

Bevorzugt weist die Auffangvorrichtung einen mit dem Auffangvorrichtungsinnenraum verbundenen zweiten Einlass, insbesondere Atemlufteinlass, zum Einlassen von Luft in den Auffangvorrichtungsinnenraum auf, wobei sich in der Arbeitsorientierung der Auffangvorrichtung der zweite Einlass bzw. Atemlufteinlass oberhalb des Einlasses befindet. Dies hat den Vorteil, dass Atemluft des Patienten, welche beim Atmen des Patienten aus dem Mundraum oder der Nase des Patienten strömt und sich in eine Luftstromrichtung mit einer horizontalen Komponente vom Patienten weg bewegt und damit allenfalls über den in der Arbeitsorientierung der Auffangvorrichtung die nach oben zeigende Öffnung bildenden Einlass strömen kann, optimal von der Auffangvorrichtung aufgefangen und abgesaugt werden kann.

Vorzugsweise ist in der Arbeitsorientierung der Auffangvorrichtung der zweite Einlass bzw. der Atemlufteinlass von der Ausschnittseite her in den Ausschnitt betrachtet hinter dem Ausschnitt in die Auffangvorrichtung hineinversetzt angeordnet. Dies hat den Vorteil, dass, wenn die Auffangvorrichtung in ihrer Arbeitsorientierung vom Patienten her gesehen von vorne zum Patienten bewegt und um den Hals des Patienten angeordnet wird, sodass sich der Hals des Patienten zumindest teilweise in dem Ausschnitt bzw. Halsausschnitt befindet, der zweite Einlass bzw. der Atemlufteinlass vor dem Mund bzw. der Nase des Patienten angeordnet wird, sodass die beim Atmen des Patienten aus dem Mundraum oder der Nase des Patienten strömende Atemluft des Patienten optimal von der Auffangvorrichtung aufgefangen werden kann. Entsprechend kann dadurch mit der Auffangvorrichtung die quecl<silberbelastete Luft, welche bei der zahnärztlichen Behandlung entsteht, optimal aufgefangen werden.

Vorzugsweise ist in der Arbeitsorientierung der Auffangvorrichtung der zweite Einlass bzw. der Atemlufteinlass schräg zum Ausschnitt bzw. Halsausschnitt hin zeigend ausgerichtet. D.h. der zweite Einlass bzw. der Atemlufteinlass ist vorzugweise zum Ausrichtungsvel<tor geneigt und zeigt mit seiner Öffnung zum Ausschnitt bzw. Halsausschnitt hin. Dies hat den Vorteil, dass der zweite Einlass bzw. Atemlufteinlass in der Arbeitsorientierung der Auffangvorrichtung weniger hoch aufsteht, womit die Auffangvorrichtung im Gebrauch vom Patienten als weniger bedrohlich wahrgenommen wird.

Der zweite Einlass bzw. Atemlufteinlass kann aber auch anders ausgerichtet sein. Alternativ zu diesen Varianten mit dem zweiten Einlass bzw. dem Atemlufteinlass besteht auch die Möglichkeit, dass die Auffangvorrichtung keinen solchen zweiten Einlass bzw. Atemlufteinlass aufweist. Eine solche Alternative hat den Vorteil, dass die Auffangvorrichtung einfacher und damit kostengünstiger hergestellt werden kann.

Der Anschluss im Auffangvorrichtungsraum weist einen Übergangsbereich auf, in welchem sich der Anschluss in den Auffangvorrichtungsinnenraum hinein aufweitet. Dieser Übergangsbereich ist mit einer Abdeckung abgedeckt, welche rotationssymmetrisch angeordnete Ausnehmungen aufweist. Diese Ausnehmungen weisen auf die Abdeckung bezogen innenliegende, d.h. dem Zentrum der Abdeckung am nächsten liegende Seitenwände, sowie aussenliegende, d.h. dem Zentrum der Abdeckung abgewandt liegende Seitenwände auf. Dabei ist unerheblich, ob die Abdeckung abnehmbar oder fest mit der Auffangvorrichtung verbunden bzw. einstückig mit einem anderen Element der Auffangvorrichtung ausgebildet ist. Weiter weisen die Ausnehmungen auf die Abdeckung bezogen im Wesentlichen radial verlaufende Seitenwände auf, die jeweils die innenliegende Seitenwand mit der aussenliegenden Seitenwand der jeweiligen Ausnehmung verbinden. Diese im Wesentlichen radial verlaufenden Seitenwände sind jeweils zu einer Rotationssymmetrieachse der Anordnung der Ausnehmungen angewinkelt. Von der Rotationssymmetrieachse der Anordnung der Ausnehmungen zur jeweiligen im Wesentlichen radial verlaufenden Seitenwand betrachtet sind die im Wesentlichen radial verlaufenden Seitenwände von unten von einer ersten Seite, d.h. von unten links oder von unten rechts, nach oben zur anderen Seite, d.h. nach oben rechts bzw. oben links geneigt, um im angesogenen Luftstrom ein Wirbel zu erzeugen, damit Luft aus dem Auffangvorrichtungsinnenraum effizienter abgesaugt werden kann.

Bevorzugt weisen die Abdeckung sowie der Übergangsbereich an der Stelle, wo er mit der Abdeckung abgedeckt ist, in wenigstens eine Richtung gemessen einen Durchmesser von mindestens 4 cm auf. Dies hat den Vorteil, dass die Abdeckung mit den Ausnehmungen einfacher gereinigt werden kann. Somit wird dadurch der Unterhalt der Auffangvorrichtung vereinfacht. Alternativ dazu besteht aber auch die Möglichkeit, dass die Abdeckung sowie der Übergangsbereich an der Stelle, wo er mit der Abdeckung abgedeckt ist, in keine Richtung gemessen einen Durchmesser von mindestens 4 cm aufweist.

Vorteilhafterweise weist die Abdeckung mindestens zehn der vorgenannten, rotationssymmetrisch angeordneten Ausnehmungen auf. Dies hat den Vorteil, dass die Luft aus dem Auffangvorrichtungsinnenraum sowie, wenn die Auffangvorrichtung in der Arbeitsorientierung ausgerichtet ist, dem darüberliegenden Raum besonders effizient abgesaugt werden kann. Alternativ dazu besteht aber auch die Möglichkeit, dass die Abdeckung weniger als zehn solcher Ausnehmungen aufweist.

Besonders bevorzugt weisen die radial verlaufenden Seitenwände, die jeweils innenliegende Seitenwand sowie aussenliegenden Seitenwand der rotationssymmetrisch angeordneten Ausnehmungen zusammengezählt eine Wandfläche auf, während die rotationssymmetrisch angeordneten Ausnehmungen zusammengezählt eine Öffnungsfläche aufweisen, wobei die Wandfläche geteilt durch die Öffnungsfläche mindestens 0.7, besonders bevorzugt mindestens 1.0 beträgt. Dies hat den Vorteil, dass im Verhältnis der Fläche der Ausnehmungen, durch welche Luft abgesogen werden kann, eine Mindestfläche angewinkelter Seitenwandfläche vorhanden ist, um besonders effel<tiv im angesogenen Luftstrom einen Wirbel zu erzeugen, damit Luft aus dem Auffangvorrichtungsinnenraum besonders effizienter abgesaugt werden kann.

Alternativ dazu besteht aber auch die Möglichkeit, dass dieses Verhältnis kleiner als 0.7 ist.

Vorteilhafterweise ist die Abdeckung mit den vorgenannten, rotationssymmetrisch angeordneten Ausnehmungen in der Arbeitsorientierung der Auffangvorrichtung zum Ausschnitt, insbesondere dem Halsausschnitt, hin geneigt. Dies hat den Vorteil, dass der Wirbel, welcher aufgrund der Abdeckung mit den Ausnehmungen im angesogenen Luftstrom erzeugt wird, im Gebrauch der Vorrichtung zum Mund des Patienten reicht, um aus der Mundhöhle des Patienten austretende Luft, insbesondere quecl<silberbelastete Luft, effizient abzusaugen.

Alternativ dazu besteht aber auch die Möglichkeit, dass ist die Abdeckung mit den vorgenannten, rotationssymmetrisch angeordneten Ausnehmungen in der Arbeitsorientierung der Auffangvorrichtung nicht zum Ausschnitt, insbesondere dem Halsausschnitt, hin geneigt ist.

Vorzugsweise weist die Auffangvorrichtung eine in der Arbeitsorientierung der Auffangvorrichtung nach unten gerichtete Unterseite auf, welche anatomisch geformt ist, um, wenn der Patient bei der zahnärztlichen Behandlung in einem Zahnarztstuhl sitzt, auf dem Brustbereich des Patienten abgestützt zu werden. Dies hat den Vorteil, dass die Auffangvorrichtung auf einfache Art und Weise positioniert werden kann.

In einer Variante dazu weist die Auffangvorrichtung einen Griff auf, an welchem sie vom Patienten in Position gehalten werden kann. In einer weiteren Variante weist die Auffangvorrichtung eine Befestigungseinrichtung auf, mit welcher die Auffangvorrichtung an einer Trägervorrichtung anbringbar ist und in Position gehalten werden kann.

Alternativ dazu weist die Auffangvorrichtung weder einen Griff, noch eine Befestigungseinrichtung, noch eine in der Arbeitsorientierung der Auffangvorrichtung nach unten gerichtete Unterseite auf, welche anatomisch geformt ist, um, wenn der Patient bei der zahnärztlichen Behandlung in einem Zahnarztstuhl sitzt, auf dem Brustbereich des Patienten abgestützt zu werden. In einer solchen Alternative kann beispielsweise das Rohr der Saugvorrichtung, an welches die Auffangvorrichtung anbringbar ist, ein festes Rohr sein. In diesem Fall bildet der Anschluss zum Anschliessen der Saugvorrichtung zum Absaugen der Luft aus dem Auffangvorrichtungsinnenraum zugleich eine Befestigungseinrichtung, mit welcher die Auffangvorrichtung an einer Trägervorrichtung anbringbar ist und in Position gehalten werden kann, wobei die Trägervorrichtung durch die Saugvorrichtung mit dem festen Rohr gebildet ist.

Bei der erfindungsgemässen Anordnung mit der Saugvorrichtung und der erfindungsgemässen Auffangvorrichtung beträgt ein Durchmesser des Rohrs vorzugsweise mindestens 40 mm. Dies hat den Vorteil, dass sichergestellt ist, dass mit der Saugvorrichtung ein ausreichend grosses Luftvolumen pro Zeiteinheit aus dem Auffangvorrichtungsinnenraum durch das Rohr angesaugt werden kann.

Alternativ dazu kann der Durchmesser des Rohrs aber auch weniger als 40 mm betragen.

Vorteilhafterweise weist die Saugvorrichtung ein luftundurchlässiges Gehäuse auf, welches den Saugvorrichtungsinnenraum umschliesst. Indem das Gehäuse abgesehen vom ersten Stutzen, allenfalls vorhandenen weiteren Stutzen, sowie dem Auslass luftundurchlässig ist, kann auf einfache Art und Weise sichergestellt werden, dass nicht quecl<silberbelastete Luft unbeabsichtigt aus dem Saugvorrichtungsinnenraum entweichen kann.

Alternativ dazu besteht aber auch die Möglichkeit, dass das Gehäuse anders ausgebildet ist.

Vorzugsweise ist das Gehäuse aus Edelstahl gefertigt. Dies hat den Vorteil, dass das Gehäuse nicht mit dem Quecksilber in der angesaugten, quecl<silberbelasteten Luft reagiert. Entsprechend besteht für das Personal, welches die Saugvorrichtung wartet, ein geringeres gesundheitliches Risiko.

Alternativ dazu besteht aber auch die Möglichkeit, dass das Gehäuse aus einem anderen Metall wie beispielsweise Aluminium oder aus einem anderen Material als Metall, wie beispielsweise Kunststoff, gefertigt ist.

Bevorzugt weist die Saugvorrichtung einen Filter auf, welcher derart im Saugvorrichtungsinnenraum angeordnet ist, dass Luft, welche im Betrieb der Saugvorrichtung durch die Luftbewegvorrichtung vom ersten Stutzen zum Auslass bewegt wird, durch den Filter hindurchströmt. Dies hat den Vorteil, dass die quecl<silberbelastete Luft, welche bei der zahnärztlichen Behandlung durch die Auffangvorrichtung und die Saugvorrichtung angesaugt wird, durch den Filter gefiltert wird. Entsprechend wird dadurch ermöglicht, die Quecl<silberbelastung aus der Luft zu filtern.

Vorteilhafterweise umfasst der Filter wenigstens einen Aktivkohlefilter oder eine Selen-Filter. Sowohl ein Selen-Filter als auch ein Aktivkohlefilter haben beide den Vorteil, dass Quecksilberdämpfe aus der Luft absorbiert werden. Ein Aktivkohlefilter hat zudem den Vorteil, dass auch Stickoxide aus der Luft absorbiert werden können.

Vorteilhafterweise umfasst der Filter einen Staubfilter und/oder einen biologischen Filter zum Filtern von organischen Strukturen wie Bakterien, Viren und/oder Pilzsporen aus der Luft. Dabei kann der biologische Filter allgemein zum Filtern von organischen Strukturen aus der Luft ausgebildet sein. Der biologische Filter kann aber auch nur zum Filtern von Bakterien, nur zum Filtern von Viren oder nur zum Filtern von Pilzsporen ausgebildet sein. Genauso kann der biologische Filter aber auch zum Filtern von Bakterien und Viren, zum Filtern von Bakterien und Pilzsporen oder zum Filtern von Viren und Pilzsporen ausgebildet sein. Der Filter kann aber auch ohne einen solchen Staubfilter und ohne einen biologischen Filter zum Filtern von organischen Strukturen wie Bakterien, Viren und/oder Pilzspuren aus der Luft auskommen.

Unabhängig davon, ob die Saugvorrichtung einen Filter aufweist, welcher derart im Saugvorrichtungsinnenraum angeordnet ist, dass Luft, welche im Betrieb der Saugvorrichtung durch den Ventilator vom ersten Stutzen zum Auslass bewegt wird, durch den Filter hindurchströmt, oder nicht, weist die Saugvorrichtung vorteilhafterweise eine UV-C-Lichtquelle auf, welche im Saugvorrichtungsinnenraum angeordnet ist, um im Betrieb der Saugvorrichtung die Luft, welche im Betrieb der Saugvorrichtung durch den Ventilator vom ersten Stutzen zum Auslass bewegt wird, mit UV-C-Licht zu bestrahlen. Dabei ist UV-C-Licht vorzugsweise elektromagnetische Strahlung im Bereich von 100 nm bis 280 nm. Dies hat den Vorteil, dass die Luft, welche bei der zahnärztlichen Behandlung durch die Auffangvorrichtung und die Saugvorrichtung angesaugt wird, mit UV-C-Licht bestrahlt wird, womit organische Strukturen wie Bakterien, Viren und/oder Pilzsporen in der Luft abgetötet werden können, bevor die Luft durch den Auslass ausgelassen wird. Somit kann während der zahnärztlichen Behandlung des Patienten das gesundheitliche Risiko sowohl für den Patienten als auch den behandelnden Zahnarzt und weitere anwesende Personen reduziert werden. Um diesen Vorteil zu erreichen, ist unerheblich, ob die UV-C-Lichtquelle UV-C-Licht einer einzigen bestimmten Wellenlänge im Bereich von UV-C-Licht abstrahlt, oder ob die UV-C-Lichtquelle UV-C-Licht verschiedener Wellenlängen in einem Teilbereich oder im gesamten Bereich der Wellenlängen von UV-C-Licht abstrahlt.

Bevorzugt weist der Saugvorrichtungsinnenraum eine erste Kammer, welche den dem ersten Stutzen anliegenden Einlassbereich des Saugvorrichtungsinnenraums bildet, eine zweite Kammer, in welcher der Filter angeordnet ist, und eine dritte Kammer auf, mit welcher der Auslass zum Auslassen der Luft aus dem Saugvorrichtungsinnenraum verbunden ist. Dies hat den Vorteil, dass auf einfache Art und Weise gewährleistet werden kann, dass Luft, welche im Betrieb der Saugvorrichtung durch die Luftbewegvorrichtung vom ersten Stutzen zum Auslass bewegt wird, durch den Filter hindurchströmt, und dass zugleich eine Wartung der Saugvorrichtung vereinfacht wird, da der Filter in einer separaten Kammer angeordnet ist. Vorzugsweise ist dabei die erste Kammer mit der zweiten Kammer verbunden, sodass Luft von der ersten Kammer in die zweite Kammer strömen kann. Zudem ist vorzugsweise die zweite Kammer mit der dritten Kammer Verbunden, sodass Luft von der zweiten Kammer in die dritte Kammer strömen kann. Vorzugsweise ist dabei die Luftbewegvorrichtung im Auslass, in der dritten Kammer oder aber im Bereich der Verbindung von der zweiten Kammer zur dritten Kammer angeordnet, um im Betrieb Luft aus der zweiten Kammer in die dritte Kammer zu bewegen.

In einer Variante dazu besteht aber auch die Möglichkeit, dass die Luftbewegvorrichtung in der zweiten Kammer, im Bereich der Verbindung von der ersten Kammer zur zweiten Kammer, oder aber in der ersten Kammer angeordnet ist.

Alternativ dazu besteht aber auch die Möglichkeit, dass der Saugvorrichtungsinnenraum keine solche erste Kammer, zweite Kammer und dritte Kammer aufweist.

Alternativ zu diesen Varianten besteht aber auch die Möglichkeit, dass die Saugvorrichtung keinen solchen im Saugvorrichtungsinnenraum angeordneten Filter aufweist.

Wenn der Saugvorrichtungsinnenraum die vorgenannte erste Kammer, zweite Kammer und dritte Kammer aufweist, so ist der erste Stutzen vorteilhafterweise mit der ersten Kammer verbunden, damit Luft durch das am ersten Stutzen angeschlossene Rohr und den ersten Stutzen in die erste Kammer im Saugvorrichtungsinnenraum gesaugt werden kann.

Unabhängig davon, ob der Saugvorrichtungsinnenraum die vorgenannten drei Kammern aufweist oder nicht, weist der erste Stutzen bevorzugt ein erstes Ventil auf, welches luftdicht schliessbar ist, um den ersten Stutzen luftdicht zu verschliessen, und welches öffenbar ist um Luft durch den ersten Stutzen in den Saugvorrichtungsinnenraum, insbesondere in die erste Kammer, fliessen zu lassen. Dies hat den Vorteil, dass der erste Stutzen luftdicht verschlossen werden kann, wenn er nicht benutzt wird.

Alternativ dazu besteht aber auch die Möglichkeit, dass der erste Stutzen kein solches erstes Ventil aufweist.

Vorzugsweise weist die Saugvorrichtung einen zweiten Stutzen zum Anschliessen eines flexiblen oder festen zweiten Rohrs zum Einlassen von Luft durch das am zweiten Stutzen angebrachte zweite Rohr in den Saugvorrichtungsinnenraum auf.

Dies hat den Vorteil, dass eine zweite erfindungsgemässe Auffangvorrichtung oder eine andere Vorrichtung zum Ansaugen von quecl<silberbelasteter Luft an die Saugvorrichtung angeschlossen werden kann.

Wenn der Saugvorrichtungsinnenraum die vorgenannte erste Kammer, zweite Kammer und dritte Kammer aufweist, so ist der zweite Stutzen vorzugsweise mit der ersten Kammer verbunden, damit Luft durch das am zweiten Stutzen angeschlossene zweiten Rohr und den zweiten Stutzen in die erste Kammer im Saugvorrichtungsinnenraum gesaugt werden kann.

Unabhängig davon, ob der Saugvorrichtungsinnenraum die vorgenannten drei Kammern aufweist oder nicht, weist der zweite Stutzen vorteilhafterweisen ein zweites Ventil auf, welches luftdicht schliessbar ist, um den zweiten Stutzen luftdicht zu verschliessen, und welches öffenbar ist, um Luft durch den zweiten Stutzen in den Saugvorrichtungsinnenraum, insbesondere in die erste Kammer, fliessen zu lassen. Dies hat den Vorteil, dass der zweite Stutzen luftdicht verschlossen werden kann, wenn er nicht benutzt wird.

Alternativ dazu besteht aber auch die Möglichkeit, dass der zweite Stutzen kein solches zweites Ventil aufweist.

Bevorzugt weist die Saugvorrichtung ein an den zweiten Stutzen anschliessbares oder angeschlossenes, zweites, flexibles oder festes Rohr mit einem Mundstück zum Einführen in einen Mundraum des Patienten während der zahnärztlichen Behandlung des Patienten und zum Absaugen von quecl<silberbelasteter Luft, insbesondere quecl<silberbelasteter Atemluft, aus dem Mundraum des Patienten auf. Dies hat den Vorteil, dass quecl<silberbelastete Luft bereits im Mundraum des Patienten und damit in nächster Nähe ihres Entstehungsortes abgesaugt werden kann.

In einer bevorzugten Variante davon ist das Mundstück durch ein drittes Rohr an einer Gas- und Flüssigl<eitstrennvorrichtung anschliessbar oder angeschlossen, um ein aus dem Mundraum des Patienten abgesaugtes Gemisch von Gas, insbesondere Luft bzw. Atemluft, und Flüssigkeit zu separieren, wobei das zweite Rohr an der Gas- und Flüssigl<eitstrennvorrichtung anschliessbar oder angeschlossen ist, um das aus dem Gemisch separierte Gas durch das zweite Rohr zum zweiten Stutzen und damit in den Saugvorrichtungsinnenraum zu führen. Dabei können das dritte Rohr sowie die Gas- und Flüssigl<eitstrennvorrichtung Bestandteile der erfindungsgemässen Anordnung oder von der erfindungsgemässen Anordnung separate Elemente sein.

In einer Variante dazu besteht auch die Möglichkeit, dass die Saugvorrichtung kein an den zweiten Stutzen anschliessbares oder angeschlossenes, zweites Rohr mit einem Mundstück zum Einführen in einen Mundraum des Patienten während der zahnärztlichen Behandlung des Patienten und zum Absaugen von quecl<silberbelasteter Luft, insbesondere quecl<silberbelasteter Atemluft, aus dem Mundraum des Patienten während der zahnärztlichen Behandlung des Patienten aufweist.

Vorzugsweise weist das Mundstück zwei Einlässe auf, wobei ein erster Einlass des Mundstücks mit einem ersten Stutzen des Mundstücks verbunden ist, wobei der erste Stutzen des Mundstücks durch einen Schlauch mit einer Gas- und Flüssigl<eitstrennvorrichtung verbindbar ist, um ein durch den ersten Einlass des Mundstücks aus dem Mundraum des Patienten abgesogenes Gemisch von Gas, insbesondere Atemluft, und Flüssigkeit zu separieren und allenfalls auch quecksilberhaltige flüssige oder feste Verbindungen vom Gas zu trennen, wobei der zweite Einlass des Mundstücks mit einem zweiten Stutzen des Mundstücks verbunden ist, wobei der zweite Stutzen mit dem zweiten, flexiblen oder festen Rohr verbindbar oder verbunden ist, um durch den zweiten Einlass quecl<silberbelastete Luft, insbesondere quecl<silberbelastete Atemluft, mit der Saugvorrichtung aus dem Mundraum des Patienten abzusaugen. Dies hat den Vorteil, dass mit dem ersten Einlass des Mundstücks hauptsächlich das Gemisch von Gas, insbesondere Atemluft, und Flüssigkeit aus dem Bereich des Mundraums des Patienten, wo die zahnärztliche Behandlung stattfindet, abgesaugt werden kann, während zugleich durch den zweiten Einlass des Mundstücks hauptsächlich Luft aus dem Mundraum des Patienten abgesaugt werden kann. Dadurch kann das quecl<silberbelastete Material und Gas optimal aus dem Mundraum des Patienten abgesaugt werden.

Dabei kann die Gas- und Flüssigl<eitstrennvorrichtung ebenfalls Bestandteil der Saugvorrichtung sein. In diesem Fall ist das Gemisch von Gas, insbesondere Atemluft, und Flüssigkeit durch die Saugvorrichtung aus dem Mundraum des Patienten absaugbar. Alternativ dazu kann die Gas- und Flüssigl<eitstrennvorrichtung aber auch separat von der Saugvorrichtung vorhanden sein. So kann sie beispielsweise die in der Regel in Zahnarztpraxen vorgesehene Gas- und Flüssigl<eitstrennvorrichtung sein. In diesem Fall ist das Gemisch von Gas, insbesondere Atemluft, und Flüssigkeit durch eine in der Zahnarztpraxis bereits vorhandene Saugeinrichtung aus dem Mundraum des Patienten absaugbar.

Vorzugsweise ist der erste Einlass des Mundstücks an einem distalen Ende des Mundstücks angeordnet, während der zweite Einlass des Mundstücks vom distalen Ende des Mundstücks in Richtung des ersten und zweiten Stutzens des Mundstücks zurückversetzt angeordnet ist. Dies hat den Vorteil, dass das Mundstück mit seinem distalen Ende und damit mit seinem ersten Einlass optimal in dem Bereich des Mundraums des Patienten, wo die zahnärztliche Behandlung stattfindet, positioniert werden kann, um das bei der zahnärztlichen Behandlung entstehende Gemisch von Gas, insbesondere Atemluft, und Flüssigkeit optimal absaugen zu können, während der zweite Einlass des Mundstücks zwangsläufig etwas von dem Bereich des Mundraums des Patienten, wo die zahnärztliche Behandlung stattfindet, positioniert wird, sodass durch den zweiten Einlass des Mundstücks hauptsächlich Luft, insbesondere quecl<silberbelastete Luft bzw. Atemluft ohne Flüssigkeit aus dem Mundraum des Patienten abgesaugt werden kann.

Besonders vorteilhaft ist der zweite Einlass des Mundstücks mindestens 0.5 cm vom ersten Einlass des Mundstücks entfernt in Richtung des ersten und zweiten Stutzens des Mundstücks zurückversetzt angeordnet. In einer Variante dazu ist der zweite Einlass des Mundstücks weniger als 0.5 cm vom ersten Einlass des Mundstücks entfernt in Richtung des ersten und des zweiten Stutzens des Mundstücks zurückversetzt angeordnet. In einer weiteren Variante dazu ist der erste Einlass des Mundstücks im Vergleich zum zweiten Einlass des Mundstücks in Richtung des ersten und des zweiten Stützens des Mundstücks zurückversetzt angeordnet.

Vorteilhafterweise weist das Mundstück zwei Rohre auf, wovon ein erstes Rohr den ersten Einlass mit dem ersten Stutzen verbindet, während ein zweites Rohr den zweiten Einlass mit dem zweiten Stutzen verbindet. Dabei sind das erste Rohr und das zweite Rohr vorzugsweise querverbindungslos, d.h. weisen keine Verbindung eines Inneren des ersten Rohrs zu einem Inneren des zweiten Rohrs auf. Alternativ dazu besteht aber auch die Möglichkeit, dass das Mundstück eine Querverbindung vom Inneren des ersten Rohrs zum Inneren des zweiten Rohrs aufweist. Genauso besteht auch die Möglichkeit, dass das Mundstück keine solche zwei Rohre aufweist.

Vorteilhafterweise weist das erste Rohr eine Krümmung von mindestens 2° auf. D.h., vorteilhafterweise ist ein Verlauf des Anschlussbereichs des ersten Rohrs an den ersten Einlass in einem Winkel von mindestens 2° zu einem Verlauf des Anschlussbereichs des ersten Rohrs an den erste Stutzen geneigt. Dies hat den Vorteil, dass die Benutzung des Mundstücks vereinfacht wird. Alternativ dazu besteht aber auch die Möglichkeit, dass das erste Rohr eine Krümmung von weniger als 2° oder gar keine Krümmung aufweist.

Vorzugsweise weist der erste Einlass des Mundstücks einen Durchmesser von mindestens 0.5 cm auf. Dies hat den Vorteil, dass durch den ersten Einlass ein ausreichendes Volumen des bei der zahnärztlichen Behandlung entstehenden Gemischs von Gas, insbesondere Atemluft, und Flüssigkeit pro Zeiteinheit optimal absaugen zu können. Alternativ dazu besteht aber auch die Möglichkeit, dass der erste Einlass des Mundstücks einen kleineren Durchmesser als 0.5 cm aufweist.

Vorzugsweise weist der zweite Einlass des Mundstücks einen Durchmesser von mindestens 0.5 cm auf. Dies hat den Vorteil, dass durch den zweiten Einlass ein ausreichendes Volumen an Luft, insbesondere quecl<silberbelastete Luft bzw. Atemluft ohne Flüssigkeit pro Zeiteinheit aus dem Mundraum des Patienten abgesaugt werden kann. Alternativ dazu besteht aber auch die Möglichkeit, dass der zweite Einlass des Mundstücks einen kleineren Durchmesser als 0.5 cm aufweist.

Vorzugsweise ist der zweite Einlass des Mundstücks mit einem Netz oder Gitter abgedeckt. Dies hat den Vorteil, dass keine grösseren Festkörper durch den zweiten Einlass angesaugt werden können. Vorzugsweise weist das Netz oder Gitter eine Maschengrösse mit einem Durchmesser der Maschenöffnungen von mindestens 0.1 mm auf. Dies hat den Vorteil, dass im Gebrauch des Mundstücks in einem Bereich vor dem zweiten Einlass eine stärkere zum zweiten Einlass hin gerichtete Strömung entsteht, wodurch Aerosole, Partikel und Tropfen stärker zum zweiten Einlass und durch den zweiten Einlass angesogen werden. Entsprechend wird dadurch die Effizienz des Mundstücks erhöht. Unabhängig von der Maschengrösse des Netzes oder Gitters ist das Netz oder Gitter vorzugsweise mit Gold oder mit Selen beschichtet. Eine Beschichtung mit Gold hat den Vorteil, dass Netz oder Gitter einfacher gereinigt werden kann. Selen hingegen hat den Vorteil, dass Quecksilber durch Selen gebunden wird. Als Variante dazu besteht aber auch die Möglichkeit, dass das Netz oder Gitter weder mit Gold noch mit Selen beschichtet ist.

Alternativ dazu besteht aber auch die Möglichkeit, dass der zweite Einlass nicht mit einem Netz oder Gitter abgedeckt ist.

Vorzugsweise weist das Mundstück zwei Rohre auf, wovon ein erstes Rohr den ersten Einlass mit dem ersten Stutzen verbindet, während ein zweites Rohr den zweiten Einlass mit dem zweiten Stutzen verbindet, wobei der erste Einlass durch um mindestens 5° zu einem Verlauf des ersten Rohrs in einem Anschlussbereich des ersten Rohrs an den ersten Einlass geneigt ist. Dies hat den Vorteil, dass eine Querschnittsfläche des ersten Einlasses grösser ist, als wenn der ersten Einlass um weniger als 5° oder gar nicht zum Verlauf des ersten Rohrs im Anschlussbereich des ersten Rohrs an den ersten Einlass geneigt ist. Entsprechend wird dadurch ermöglicht, dass mit dem ersten Einlass pro Zeiteinheit mehr abgesaugt werden kann. Alternativ dazu besteht aber auch die Möglichkeit, dass der erste Einlass durch um weniger als 5° oder gar nicht zum Verlauf des ersten Rohrs in einem Anschlussbereich des ersten Rohrs an den ersten Einlass geneigt ist.

Vorzugsweise weist das Mundstück zwei Rohre auf, wovon ein erstes Rohr den ersten Einlass mit dem ersten Stutzen verbindet, während ein zweites Rohr den zweiten Einlass mit dem zweiten Stutzen verbindet, wobei der zweite Einlass durch um mindestens 1° zu einem Verlauf des zweiten Rohrs in einem Anschlussbereich des zweiten Rohrs an den zweiten Einlass geneigt ist. Dies hat den Vorteil, dass eine Querschnittsfläche des zweiten Einlasses grösser ist, als wenn der zweite Einlass um weniger als 1° oder gar nicht zum Verlauf des zweiten Rohrs im Anschlussbereich des zweiten Rohrs an den zweiten Einlass geneigt ist. Entsprechend wird dadurch ermöglicht, dass mit dem zweiten Einlass pro Zeiteinheit mehr abgesaugt werden kann. Alternativ dazu besteht aber auch die Möglichkeit, dass der zweite Einlass durch um weniger als 1° oder gar nicht zum Verlauf des zweiten Rohrs in einem Anschlussbereich des zweiten Rohrs an den zweiten Einlass geneigt ist.

In einer Alternative zu den Varianten mit zwei Einlässen weist das Mundstück hingegen nur einen Einlass auf.

Das Mundstück kann auch separat von der erfindungsgemässen Anordnung vertrieben werden. So kann das Mundstück beispielsweise zusammen mit der nachfolgend beschriebenen Sauganordnung vertrieben werden. Genauso kann das Mundstück aber auch als separate Einheit vertrieben werden. Somit handelt es sich bei einem weiteren Aspekt der Erfindung um ein Mundstück für eine zahnärztliche Behandlung, wobei das Mundstück zwei Einlässe aufweist, wobei ein erster Einlass des Mundstücks mit einem ersten Stutzen des Mundstücks verbunden ist, wobei der erste Stutzen des Mundstücks durch einen Schlauch mit einer Gas- und Flüssigl<eitstrennvorrichtung verbindbar ist, um ein durch den ersten Einlass des Mundstücks aus dem Mundraum des Patienten abgesogenes Gemisch von Gas, insbesondere Atemluft, und Flüssigkeit zu separieren und allenfalls auch quecksilberhaltige flüssige oder feste Verbindungen vom Gas zu trennen, wobei der zweite Einlass des Mundstücks mit einem zweiten Stutzen des Mundstücks verbunden ist, wobei der zweite Stutzen mit einem zweiten, flexiblen oder festen Rohr verbindbar ist, um durch den zweiten Einlass quecl<silberbelastete Luft, insbesondere quecl<silberbelastete Atemluft, mit der Saugvorrichtung aus dem Mundraum des Patienten abzusaugen. Dabei kann das als separate Einheit vertriebene Mundstück alle vorgehend erläuterten zusätzlichen Merkmale aufweisen.

Vorzugsweise weist die Saugvorrichtung ein an den ersten oder zweiten Stutzen abschliessbares oder angeschlossenes, flexibles oder festes drittes Rohr zum Ansaugen von Luft, insbesondere quecl<silberbelasteter Raum- und Atemluft, aus Bodennähe auf. Dies hat den Vorteil, dass quecl<silberbelastete Luft, welche während einer zahnärztlichen Behandlung entsteht und nicht sogleich aufgefangen und abgesaugt wird und daher im Behandlungsraum zum Boden hin absinkt, während oder nach der zahnärztlichen Behandlung durch die Anordnung aus der Bodennähe abgesaugt werden kann.

Alternativ dazu besteht aber auch die Möglichkeit, dass die Saugvorrichtung kein solches drittes Rohr aufweist.

Es besteht die Möglichkeit, dass die Saugvorrichtung nicht in der vorgenannten Anordnung mit der erfindungsgemässen Auffangvorrichtung, sondern separat von der vorgehend beschriebenen Anordnung in einem zweiten Aspekt der Erfindung in einer Sauganordnung mit einem an den zweiten Stutzen der Saugvorrichtung anschliessbaren oder angeschlossenen, flexiblen oder festen zweiten Rohr mit einem Mundstück zum Einführen in einen Mundraum des Patienten während der zahnärztlichen Behandlung des Patienten und zum Absaugen von quecl<silberbelasteter Luft, insbesondere quecl<silberbelasteter Atemluft, aus dem Mundraum des Patienten vertrieben wird. In diesem zweiten Aspekt der Erfindung umfasst die Saugvorrichtung wenigstens einen Saugvorrichtungsinnenraum, einen mit dem Saugvorrichtungsinnenraum verbundenen Auslass zum Auslassen von Luft aus dem Saugvorrichtungsinnenraum in eine Umgebung der Saugvorrichtung, einen mit dem Saugvorrichtungsinnenraum verbundenen zweiten Stutzen zum Einlassen von Luft in den Saugvorrichtungsinnenraum und eine Luftbewegvorrichtung, insbesondere eine Saugturbine oder einen Ventilator zum Erzeugen eines Unterdrucks zumindest in einem dem zweiten Stutzen anliegenden Einlassbereich des Saugvorrichtungsinnenraums, um Luft durch den zweiten Stutzen in den Saugvorrichtungsinnenraum zu saugen und durch den Auslass aus dem Saugvorrichtungsinnenraum auszulassen. Dabei umfasst die Sauganordnung ein an dem zweiten Stutzen der Saugvorrichtung anschliessbares oder angeschlossenes, flexibles oder festes zweites Rohr mit einem Mundstück zum Einführen in einen Mundraum des Patienten während der zahnärztlichen Behandlung des Patienten und zum Absaugen von quecl<silberbelasteter Luft, insbesondere quecl<silberbelasteter Atemluft, aus dem Mundraum des Patienten. Dabei ist nicht erforderlich, dass die Saugvorrichtung den vorbeschriebenen ersten Stutzen aufweist. Allerdings kann die Saugvorrichtung den vorbeschrieben ersten Stutzen aufweisen. Auch kann die Saugvorrichtung zusätzlich eines, mehrere oder alle weiteren im vorliegenden Text als bevorzugt beschriebenen Merkmale der Saugvorrichtung umfassen.

In einer bevorzugten Variante der Sauganordnung ist das Mundstück durch ein drittes Rohr an einer Gas- und Flüssigl<eitstrennvorrichtung anschliessbar oder angeschlossen, um ein aus dem Mundraum des Patienten abgesaugtes Gemisch von Gas, insbesondere Luft bzw. Atemluft, und Flüssigkeit zu separieren, wobei das zweite Rohr an der Gas- und Flüssigl<eitstrennvorrichtung anschliessbar oder angeschlossen ist, um das aus dem Gemisch separierte Gas durch das zweite Rohr zum zweiten Stutzen und damit in den Saugvorrichtungsinnenraum zu führen. Dabei können das dritte Rohr sowie die Gas- und Flüssigl<eitstrennvorrichtung Bestandteile der erfindungsgemässen Sauganordnung oder von der erfindungsgemässen Sauganordnung separate Elemente sein.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine vereinfachte, schematische Schrägansicht einer erfindungsgemässen Auffangvorrichtung zum Auffangen und Absaugen von quecksilber-belasteter Raum- und Atemluft aus einer Umgebung eines Kopfs eines Patienten während einer zahnärztlichen Behandlung des Patienten,
- Fig. 2: eine vereinfachte, schematische Schrägansicht einer zweiten erfindungs-gemässen Auffangvorrichtung zum Auffangen und Absaugen von quecl<silberbelasteter Raum- und Atemluft aus einer Umgebung eines Kopfs eines Patienten während einer zahnärztlichen Behandlung des Patienten,
- Fig. 3: eine vereinfachte, schematische Schrägansicht einer dritten erfindungs-gemässen Auffangvorrichtung zum Auffangen und Absaugen von quecl<silberbelasteter Raum- und Atemluft aus einer Umgebung eines Kopfs eines Patienten während einer zahnärztlichen Behandlung des Patienten,
- Fig. 4: eine vereinfachte, schematische Schrägansicht einer erfindungsgemässen Anordnung mit einer Saugvorrichtung und einer erfindungsgemässen Auffangvorrichtung,
- Fig. 5: eine vereinfachte, schematische Querschnittsdarstellung eines Gehäuses der Saugvorrichtung der in Figur 4 gezeigten Anordnung,
- Fig. 6: eine vereinfachte, schematische Schrägansicht eines Mundstücks für eine zahnärztliche Behandlung gemäss einem weiteren Aspekt der Erfindung, und
- Fig. 7: eine schematische Querschnittsdarstellung eines weiteren Mundstücks für eine zahnärztliche Behandlung gemäss dem weiteren Aspekt der Erfindung.

Grundsätzlich sind in den Figuren gleiche Teile mit gleichen Bezugszeichen versehen.

### Wege zur Ausführung der Erfindung

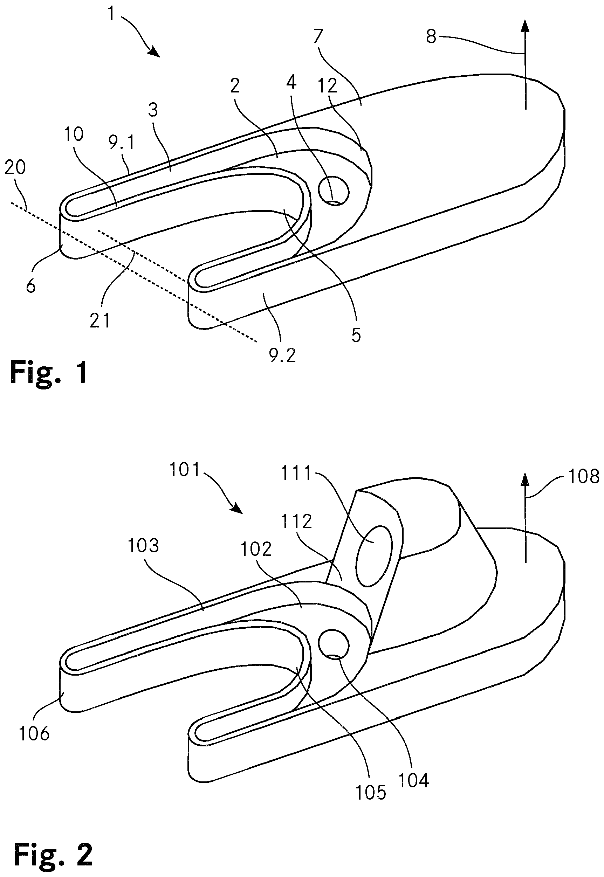

Figur 1 zeigt eine vereinfachte, schematische Schrägansicht einer erfindungsgemässen Auffangvorrichtung 1 zum Auffangen und Absaugen von quecl<silberbelasteter Raum- und Atemluft aus einer Umgebung eines Kopfs eines Patienten während einer zahnärztlichen Behandlung des Patienten. Die Auffangvorrichtung 1 umfasst einen Auffangvorrichtungsinnenraum 2 und einen mit dem Auffangvorrichtungsinnenraum 2 verbundenen Einlass 3 zum Einlassen von Luft in den Auffangvorrichtungsinnenraum 2. Weiter umfasst die Auffangvorrichtung 1 einen Anschluss 4 zum Anschliessen eines flexiblen oder starren Rohres einer Saugvorrichtung zum Absaugen der Luft aus dem Auffangvorrichtungsinnenraum 2.

Im Gebrauch kann die Auffangvorrichtung 1 in einer Arbeitsorientierung ausgerichtet werden. Wenn sich die Auffangvorrichtung 1 in dieser Arbeitsorientierung befindet, bildet der Einlass 3 eine nach oben zeigende Öffnung, durch welche Luft von ausserhalb der Auffangvorrichtung 1 in den Auffangvorrichtungsinnenraum 2 absinken kann. Damit möglichst viel Luft durch den Einlass 3 in den Auffangvorrichtungsinnenraum 2 absinken kann, weist der Einlass 3 eine Fläche von mindestens 200 cm² auf.

In Figur 1 ist die Auffangvorrichtung 1 in der Arbeitsorientierung gezeigt. Entsprechend ist ersichtlich, dass der Einlass 3 nach oben offen ist und damit eine nach oben zeigende Öffnung bildet, durch welche Luft von ausserhalb der Auffangvorrichtung 1 in den Auffangvorrichtungsinnenraum 2 absinken kann.

Wie in Figur 1 durch einen vertikal nach oben zeigenden Pfeil symbolisiert, weist die Auffangvorrichtung 1 einen zur Auffangvorrichtung 1 fix ausgerichteten Ausrichtungsvel<tor 8 auf, welcher in eine Richtung zeigt und durch seine Ausrichtung im Raum eine Ausrichtung der Auffangvorrichtung 1 angibt. Dieser Ausrichtungsvel<tor 8 in der Arbeitsorientierung der Auffangvorrichtung 1 ist im Wesentlichen nach oben ausgerichtet. Das heisst, dass in der Arbeitsorientierung der Auffangvorrichtung 1 der Ausrichtungsvektor 8 an der Spitze eines hier nicht gezeigten, rotationssymmetrisch um eine vertikale Achse ausgerichteten und sich nach oben öffnenden Konus beginnt und innerhalb dieses Konus nach oben zeigt. Dabei ist ein zwischen der vertikalen Achse und einer Mantelfläche des Konus gemessener Öffnungswinkel des Konus 45°. In einer ersten Variante dazu ist dieser Öffnungswinkel 30°. In einer zweiten Variante dazu ist dieser Öffnungswinkel 20°. In jeder dieser drei Variante ist in jeder möglichen Orientierung des Ausrichtungsvel<tors 8 innerhalb des Konus der Einlass 3 eine nach oben zeigende Öffnung, durch welche Luft von ausserhalb der Auffangvorrichtung 1 in den Auffangvorrichtungsinnenraum 2 absinken kann. Somit befindet sich die Auffangvorrichtung 1 in der Arbeitsorientierung, wenn sich ihr Ausrichtungsvel<tor 8 innerhalb des Konus befindet.

Die Auffangvorrichtung 1 weist weiter einen Ausschnitt 5 auf, welcher sich in der Arbeitsorientierung der Auffangvorrichtung 1 seitlich in einer als Ausschnittseite 6 bezeichneten Seite der Auffangvorrichtung 1 befindet und sich von einer Oberseite 7 der Auffangvorrichtung 1 zu einer Unterseite der Auffangvorrichtung 1 reicht, sodass die Auffangvorrichtung 1 in der Arbeitsorientierung um einen Hals des Patienten angeordnet werden kann, sodass sich der Hals des Patienten zumindest teilweise in dem Ausschnitt 5 befindet.

In der Figur 1 ist die Auffangvorrichtung 1, wie bereits erwähnt, in der Arbeitsorientierung gezeigt, d.h. der Einlass 3 ist nach oben hin offen. In der Darstellung der Figur 1 ist der Ausrichtungsvel<tor 8 vertikal nach oben ausgerichtet. Dabei ist die Auffangvorrichtung 1 in einer derartigen Orientierung um den Ausrichtungsvel<tor 8 dargestellt, dass die Ausschnittseite 6 nach links unten zeigt. Entsprechend reicht der Ausschnitt 5 in der Darstellung der Figur 1 von unten links her in Richtung oben rechts zur Mitte der Auffangvorrichtung 1 in die Auffangvorrichtung 1 hinein. Dabei bildet die Auffangvorrichtung 1 beidseitig des Ausschnitts 5 je einen Arm 9.1, 9.2. Diese beiden Arme 9.1, 9.2 zeigen beidseitig des Ausschnitts 5 in Figur 1 nach unten links. Dabei bilden die Stirnseiten der freien Enden der Arme 9.1, 9.2 die Ausschnittseite 6.

Für eine zahnärztliche Behandlung wird die Auffangvorrichtung 1 dem Patienten von vorne mit den beiden Armen 9.1, 9.2, Ausschnittseite 6 voraus um den Hals angeordnet, sodass sich der Hals des Patienten zumindest teilweise zwischen den beiden Armen 9.1, 9.2 und damit zumindest teilweise in dem Ausschnitt 5 befindet. Damit umgreift die Auffangvorrichtung 1 den Hals des Patienten vorne sowie seitlich und entsprechend auf drei Seiten.

Wie in Figur 1 ersichtlich, weist die Auffangvorrichtung 1 einen Randbereich 10 auf, welcher an der Ausschnittseite 6 anliegt, entlang dem gesamten Ausschnitt 5 verläuft und sich in der Arbeitsorientierung der Auffangvorrichtung 1 auf der Oberseite 7 der Auffangvorrichtung 1 befindet. Dabei reicht in der Arbeitsorientierung der Auffangvorrichtung 1 der Einlass 3 in dem Randbereich 10 von vertikal oben betrachtet näher als 1 cm an eine seitliche Aussenkante der Auffangvorrichtung 1. In einer Variante davon reicht in der Arbeitsorientierung der Auffangvorrichtung 1 der Einlass 3 in dem Randbereich 10 von vertikal oben betrachtet sogar näher als 0.5 cm an die seitliche Aussenkante der Auffangvorrichtung 1. In beiden Varianten erstrecl<t sich der Einlass 3 in dem Randbereich 10 entlang dem Ausschnitt 5, sodass sich in der Arbeitsorientierung der Auffangvorrichtung 1 der Einlass 3 um den Hals des Patienten erstreckt, wenn die Auffangvorrichtung 1 um den Hals des Patenten angeordnet ist.

Wie in Figur 1 ersichtlich, weist die Auffangvorrichtung 1 eine Rückwand 12 auf, welche in der Arbeitsorientierung der Auffangvorrichtung 1 von der Ausschnittseite 6 her in den Ausschnitt 5 betrachtet hinter dem Einlass 3 angeordnet ist und damit den Einlass 3 auf der der Ausschnittseite 6 gegenüberliegenden Seite der Auffangvorrichtung 1 begrenzt.

Um optimal um den Hals des Patienten angeordnet werden zu können, weist der Ausschnitt 5 in der Arbeitsorientierung der Auffangvorrichtung 1 in der Ausschnittseite 6 horizontal entlang der Ausschnittseite 6 gemessen eine Breite von 70 mm auf. In einer ersten Variante dazu beträgt die Breite 100 mm. In einer zweiten Variante beträgt die Breite 150 mm. In einer dritten Variante beträgt die Breite 190 mm. In allen drei Varianten ist die Breite entlang der Ausschnittseite 6 gemessen, indem eine gerade Linie 20 an die Ausschnittseite 6 angelegt wird, wobei die gerade Linie 20 die Ausschnittseite 6 auf einer ersten Seite des Ausschnitts 5 tangential berührt und die Ausschnittseite 6 auf einer zweiten Seite des Ausschnitts 5 tangential berührt, und senkrecht zum Ausrichtungsvel<tor 8 ausgerichtet ist. Dabei wird die Breite des Ausschnitts 5 in dem Ausschnitt 5 entlang einer Messlinie 21 gemessen, welche von der geraden Linie 20 in eine Richtung senkrecht zur geraden Linie 20 und senkrecht zum Ausrichtungsvel<tor 8 um 5 cm in den Ausschnitt 5 hinein verschoben ist und parallel zur geraden Linie 20 verläuft.

Von der geraden Linie 20 aus gemessen reicht der Ausschnitt 5 in der Arbeitsorientierung der Auffangvorrichtung 1 100 mm tief in die Auffangvorrichtung 1 hinein. In einer Variante dazu reicht der Ausschnitt 5 von der geraden Linie 20 aus gemessen in der Arbeitsorientierung der Auffangvorrichtung 1 140 mm tief in die Auffangvorrichtung 1 hinein. In einer weiteren Variante dazu reicht der Ausschnitt 5 von der geraden Linie 20 aus gemessen in der Arbeitsorientierung der Auffangvorrichtung 1 160 mm tief in die Auffangvorrichtung 1 hinein.

Diese Masse haben den Vorteil, dass für unterschiedlich grosse Patienten, wie beispielsweise kleinere Kinder oder auch Erwachsene als Patienten, der Hals des Patienten zu zumindest 30% in dem Ausschnitt 5 angeordnet werden kann.

Figur 2 zeigt eine vereinfachte, schematische Schrägansicht einer zweiten erfindungsgemässen Auffangvorrichtung 101 zum Auffangen und Absaugen von quecksilberbelasteter Raum- und Atemluft aus einer Umgebung eines Kopfs eines Patienten während einer zahnärztlichen Behandlung des Patienten. Diese Auffangvorrichtung 101 ist grösstenteils identisch mit der in Figur 1 gezeigten Auffangvorrichtung 1. Allerdings weist die in Figur 2 gezeigte Auffangvorrichtung 101 einen zweiten Einlass 111 zum Einlassen von Luft in den Auffangvorrichtungsinnenraum 102 auf, wobei sich in der Arbeitsorientierung der Auffangvorrichtung 101 der zweite Einlass 111 oberhalb des Einlasses 103 befindet. Dieser zweite Einlass 111 ist ein Atemlufteinlass und nahe beim Anschluss 104 mit dem Auffangvorrichtungsinnenraum 102 verbunden, sodass, wenn ein Rohr an den Anschluss 104 angeschlossen wird, nicht nur Luft durch den Einlass 103, sondern zugleich auch Luft durch den zweiten Einlass 111 angesogen wird.

Wie in der Figur 2 ersichtlich, weist die Auffangvorrichtung 101 wie bereits die in der Figur 1 gezeigte Auffangvorrichtung 1 eine Rückwand 112 auf, welche in der Arbeitsorientierung der Auffangvorrichtung 101 von der Ausschnittseite 106 her in den Ausschnitt 105 betrachtet hinter dem Einlass 103 angeordnet ist und damit den Einlass 103 auf der der Ausschnittseite 106 gegenüberliegenden Seite der Auffangvorrichtung 101 begrenzt. Diese Rückwand 112 reicht in der Arbeitsorientierung der Auffangvorrichtung 101 12 cm weiter nach oben als der Randbereich, welcher an der Ausschnittseite 106 anliegt und entlang dem Ausschnitt 105 verläuft und sich in der Arbeitsorientierung der Auffangvorrichtung 101 auf der Oberseite der Auffangvorrichtung 101 befindet. In diesem nach oben stehenden Randbereich der Rückwand 112 ist der der zweite Einlass 111 angeordnet.

Damit diese höhere Rückwand 112 den Zahnarzt bei der zahnärztlichen Behandlung des Patienten nicht behindert, kann die Rückwand 112 in der Arbeitsorientierung der Auffangvorrichtung 101 von der Ausschnittseite 106 her in den Ausschnitt 105 betrachtet asymmetrisch geformt sein, indem sie auf der einen Seite höher als auf der anderen Seite ist. Sie kann aber auch symmetrisch geformt sein, indem sie auf beiden Seiten gleich hoch ist.

Wie in Figur 2 ersichtlich, ist in der Arbeitsorientierung der Auffangvorrichtung 101 der zweite Einlass 111 von der Ausschnittseite 106 her in den Ausschnitt 105 betrachtet hinter dem Ausschnitt 105 in die Auffangvorrichtung 101 hineinversetzt angeordnet. Dadurch wird, wenn die Auffangvorrichtung 101 in ihrer Arbeitsorientierung vom Patienten her gesehen von vorne zum Patienten bewegt und um den Hals des Patienten angeordnet wird, sodass sich der Hals des Patienten zumindest teilweise in dem Ausschnitt 105 befindet, der zweite Einlass 111 vor dem Mund bzw. der Nase das Patienten angeordnet, sodass die beim Atmen des Patienten aus dem Mundraum oder der Nase des Patienten strömende Atemluft des Patienten optimal von der Auffangvorrichtung 101 aufgefangen werden kann.

Wie ebenfalls in Figur 2 ersichtlich, ist in der Arbeitsorientierung der Auffangvorrichtung 101 der zweite Einlass 111 schräg zum Ausschnitt 105 hin zeigend ausgerichtet. D.h. der zweite Einlass 111 ist zum Ausrichtungsvel<tor 108 geneigt und zeigt mit seiner Öffnung zum Ausschnitt 105 hin.

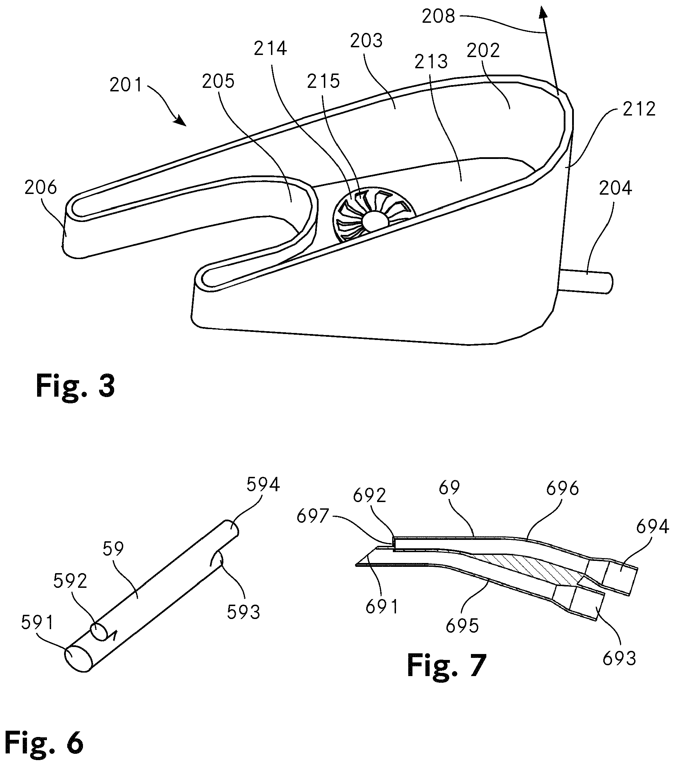

Figur 3 zeigt eine vereinfachte, schematische Schrägansicht einer dritten erfindungsgemässen Auffangvorrichtung 201 zum Auffangen und Absaugen von quecksilberbelasteter Raum- und Atemluft aus einer Umgebung eines Kopfs eines Patienten während einer zahnärztlichen Behandlung des Patienten. Diese Auffangvorrichtung 201 ist ähnlich wie die in Figur 1 gezeigte Auffangvorrichtung 1 aufgebaut. Der Körper dieser Auffangvorrichtung 201 umfasst eine obere Platte 213 und eine untere, unterhalb der oberen Platte 213 angeordnete, um etwa 30° zur oberen Platte 213 angewinkelte Platte, wobei die obere Platte 213 und die untere Platte durch eine im Wesentlichen senkrecht zur oberen Platte 213 ausgerichtete, umlaufende Wandung 212 miteinander verbunden sind. Dabei überschiesst die umlaufende Wandung 212 die obere Platte 213 im Bereich der Ausschnittseite 206 und des Ausschnitts 205 etwas nach oben. Ausgehend von der Ausschnittseite 206 nimmt dieses Überschiessen der umlaufenden Wandung 212 zu einer der Ausschnittseite 206 gegenüberliegenden Seite der Auffangvorrichtung 201 hin kontinuierlich zu. Damit bildet die umlaufende Wandung 212 einen umlaufenden

Randbereich, welcher den Einlass 203 der Auffangvorrichtung 201 umschliesst. Entsprechend ist der Ausrichtungsvel<tor 208 senkrecht zu einer Ebene ausgerichtet, in welcher der durch die umlaufende Wandung 212 gebildete umlaufende Randbereich im Wesentlichen verläuft. Somit bildet die umlaufende Wandung 212 zugleich auch die bereits im Zusammenhang mit der Figur 1 genannte Rückwand der Auffangvorrichtung 201, welche in der Arbeitsorientierung der Auffangvorrichtung 201 von der Ausschnittseite 206 her in den Ausschnitt 205 betrachtet hinter dem Einlass 203 angeordnet ist und damit den Einlass 203 auf der der Ausschnittseite 206 gegenüberliegenden Seite der Auffangvorrichtung 201 begrenzt.

Wie bereits im Zusammenhang mit der Figur 2 erläutert, kann in einer Variante diese Rückwand 212 in der Arbeitsorientierung der Auffangvorrichtung 201 auch weiter nach oben als der Randbereich reichen, welcher an der Ausschnittseite 206 anliegt und entlang dem Ausschnitt 205 verläuft und sich in der Arbeitsorientierung der Auffangvorrichtung 201 auf der Oberseite der Auffangvorrichtung 201 befindet. Beispielsweise kann die Rückwand 212 in der Arbeitsorientierung der Auffangvorrichtung 4 cm weiter nach oben reichen als der Randbereich, welcher an der Ausschnittseite 206 anliegt und entlang dem Ausschnitt 205 verläuft und sich in der Arbeitsorientierung der Auffangvorrichtung 201 auf der Oberseite der Auffangvorrichtung 201 befindet. Weiter kann diese höhere Rückwand auch wie im Zusammenhang mit der Figur 2 erläutert von der Ausschnittseite 206 her in den Ausschnitt 205 betrachtet symmetrisch oder asymmetrisch ausgebildet sein.

In der Auffangvorrichtung 201 ist zwischen der oberen Platte 213 und der unteren Platte ein Hohlraum vorgesehen. Dabei weist die obere Platte 213 etwa mittig eine kreisförmige Ausnehmung auf, in welcher ein Trichter in den Hohlraum zwischen der oberen Platte 213 und der unteren Platte versenkt ist. Dieser Trichter geht in ein Rohr über, welches auf der der Ausschnittseite 206 gegenüberliegenden Seite der Auffangvorrichtung 201 aus der umlaufenden Wandung 212 hervorsteht und den Anschluss 204 der Auffangvorrichtung 201 bildet. Somit weist der Anschluss 204 im Auffangvorrichtungsraum einen Übergangsbereich auf. Wenn die Auffangvorrichtung 201 somit mit dem Anschluss 204 an eine Saugvorrichtung angeschlossen ist, kann daher Luft aus dem Auffangvorrichtungsinnenraum 202 von oberhalb der oberen Platte 213 durch den Trichter und den Anschluss 204 abgesogen werden. Um dabei die Saugwirkung zu erhöhen, ist auf der kreisförmigen Ausnehmung in der oberen Platte 213 und damit im Übergangsbereich ein Deckel 214 als Abdeckung aufgebracht, welcher zehn oder mehr rotationssymmetrisch angeordnete Ausnehmungen 215 aufweist und in der Arbeitsorientierung der Auffangvorrichtung 201 etwas zum Ausschnitt 205 hin geneigt. Dieser Deckel 214 sowie der Übergangsbereich an der Stelle, wo der Decke 214 aufgebracht ist, weisen einen Durchmesser von 20 cm auf. Unabhängig von diesem Durchmesser geben die Ausnehmungen 215 dem Deckel 214 ein turbinenartiges Bild. Sie weisen auf den Deckel 214 bezogen innenliegende, d.h. dem Zentrum des Deckels 214 am nächsten liegende Seitenwände, sowie aussenliegende, d.h. dem Zentrum des Deckels 214 abgewandt liegende Seitenwände auf. Die innenliegenden Seitenwände weisen dabei eine Länge von 0.6 cm und eine Dicke von 0.6 cm auf, während die aussenliegenden Seitenwände eine Länge von 2.0 cm und eine Dicke von 1.0 cm aufweisen. Zudem weisen die Ausnehmungen 215 auf den Deckel 214 bezogen leicht geschwungene, im Wesentlichen radial verlaufende Seitenwände auf, welche jeweils die innenliegende Seitenwand mit der aussenliegenden Seitenwand verbinden. Diese im Wesentlichen radial verlaufenden Seitenwände weisen eine Länge von 6.5 cm sowie eine von innen nach aussen kontinuierlich von 0.6 cm auf 1.0 cm zunehmende Dicke auf und sind jeweils zur Rotationssymmetrieachse der Anordnung der Ausnehmungen 215 angewinkelt. Von der Rotationssymmetrieachse der Anordnung der Ausnehmungen 215 zur jeweiligen im Wesentlichen radial verlaufenden Seitenwand betrachtet sind die im Wesentlichen radial verlaufenden Seitenwände von unten links nach oben rechts geneigt. Dadurch wird im angesogenen Luftstrom ein Wirbel erzeugt, wodurch Luft aus dem Auffangvorrichtungsinnenraum 202 effizienter abgesaugt werden kann. Jede der Ausnehmungen 215 weist somit eine Wandfläche von etwas mehr als 12.5 cm² auf, welche sich aus der Fläche der innenliegenden Seitenwand, der Fläche der aussenliegenden Seitenwand sowie der Flächen der beiden im Wesentlichen radial verlaufenden Seitenwände zusammensetzt. Zudem weist jede der Ausnehmungen 215 eine Öffnungsfläche von etwas weniger als 8.5 cm² auf. Das Verhältnis der Wandfläche geteilt durch die Öffnungsfläche ist somit grösser als 1.47. Da die zehn Ausnehmungen 215 alle gleich geformt sind, gilt dieses Verhältnis auch für die Summe der Wandflächen der zehn Ausnehmungen 215 geteilt durch die Summe der Öffnungsflächen der zehn Ausnehmungen 215. In einer Variante dazu kann dieses Verhältnis aber beispielsweise auch 0.7, 0.9, 1.0, 1.1 oder 1.3 sein. Genauso kann dieses Verhältnis aber auch kleiner als 0.7 oder grösser als 1.5 sein.

Ansonsten ist die in Figur 3 gezeigte Auffangvorrichtung 201 gleich wie die in den Figuren 1 und 2 gezeigten Auffangvorrichtungen 1, 101 gebaut. Insbesondere weist der Ausschnitt 205 der in Figur 3 gezeigten Auffangvorrichtung 201 in der Arbeitsorientierung der Auffangvorrichtung 201 in der Ausschnittseite 206 horizontal entlang der Ausschnittseite 206 gemessen eine gleiche Breite wie die in Figur 1 in ihren verschiedenen Varianten beschriebene Auffangvorrichtung 1 auf. Auch reicht der Ausschnitt 205 der in Figur 3 gezeigten Auffangvorrichtung 201 in der Arbeitsorientierung der Auffangvorrichtung 201 gleich tief in die Auffangvorrichtung 201 hinein wie bei der in Figur 1 in ihren verschiedenen Varianten beschriebenen Auffangvorrichtung 1.

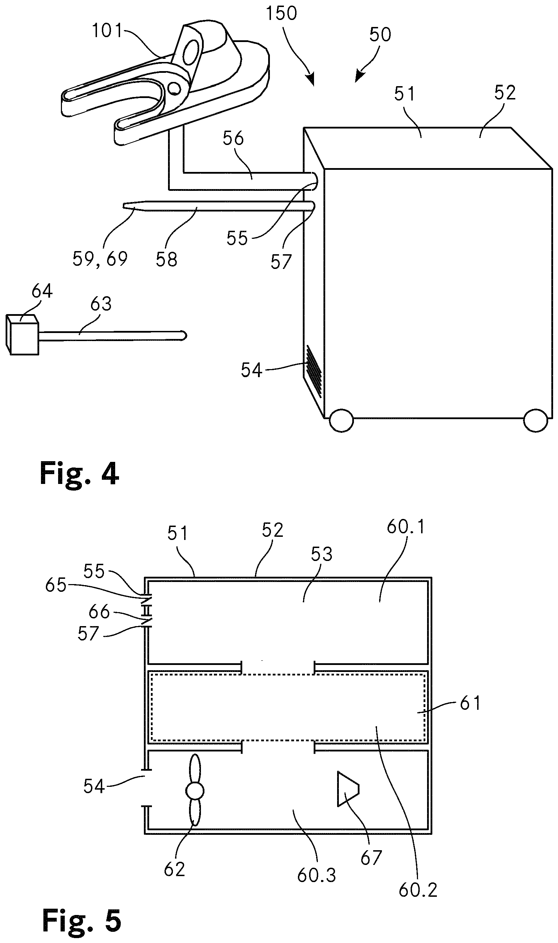

Figur 4 zeigt eine vereinfachte, schematische Schrägansicht einer erfindungsgemässen Anordnung 50 mit einer Saugvorrichtung 51 und einer erfindungsgemässen Auffangvorrichtung 101. Dabei ist in Figur 4 als Beispiel für die erfindungsgemässe Auffangvorrichtung die in Figur 2 gezeigte erfindungsgemässe Auffangvorrichtung 101 gezeigt. In einer Variante dazu kann aber auch die in Figur 1 gezeigte erfindungsgemässe Auffangvorrichtung 1. Die in Figur 3 gezeigte erfindungsgemässe Auffangvorrichtung 201 oder eine beliebige andere, erfindungsgemässe Auffangvorrichtung eingesetzt werden.

Wie in Figur 4 gezeigt, weist die Saugvorrichtung 51 ein luftundurchlässiges Gehäuse 52 auf, welches aus Edelstahl gefertigt und verschweisst ist. Dieses Gehäuse 52 umschliesst einen Saugvorrichtungsinnenraum 53 der Saugvorrichtung 51, dessen Form, Konstruktion und Inhalt nachfolgend im Rahmen der Figur 5 genauer erläutert ist. In dem Gehäuse 52 ist ein schlitzförmiger Auslass 54 zum Auslassen von Luft aus dem Saugvorrichtungsinnenraum 53 in eine Umgebung der Saugvorrichtung 51 angebracht. Zudem ist das Gehäuse 52 innen mit auf Holzplatten festgeklebten Schaumstoffeinlagen schallisoliert. Alternativ zu den Schaumstoffeinlagen kann auch anderes schalldämmendes Material verwendet werden.

In einem oberen Bereich des Gehäuses 52 ist ein mit dem Saugvorrichtungsinnenraum 53 verbundener erster Stutzen 55 zum Einlassen von Luft in den Saugvorrichtungsinnenraum 53 angeordnet. An diesen ersten Stutzen 55 ist ein Rohr 56 angeschlossen, welches an den Anschluss 104 der Auffangvorrichtung 101 angeschlossen ist, um Luft aus dem Auffangvorrichtungsinnenraum 102 durch das Rohr 56 in den Saugvorrichtungsinnenraum 53 abzusaugen. In der Figur 3 ist das Rohr 56 als festes Rohr mit einem Knick dargestellt. Das Rohr 56 kann aber auch aus festen Bereichen bestehen, welche durch Gelenke miteinander verbunden sind, sodass die Auffangvorrichtung 101 relativ zur Saugvorrichtung 51 bewegt werden kann. In einer weiteren Variante hingegen ist das Rohr 56 ein flexibles Rohr in der Form eines Schlauchs. In allen drei Varianten weist das Rohr einen Durchmesser von 40 mm auf, damit pro Zeiteinheit ein grosses Luftvolumen durch das Rohr 56 abgesaugt werden kann.

Wie in Figur 4 ersichtlich, weist die Saugvorrichtung 51 einen zweiten Stutzen 57 zum Anschliessen eines zweiten Rohrs 58 zum Einlassen von Luft durch das am zweiten Stutzen 57 angebrachte zweite Rohr 58 in den Saugvorrichtungsinnenraum 53 auf. Dieses zweite Rohr 58 ist ein flexibler Schlauch und weist ein Mundstück 59, 69 zum Einführen in einen Mundraum des Patienten während der zahnärztlichen Behandlung des Patienten und zum Absaugen von quecl<silberbelasteter Luft, insbesondere quecl<silberbelasteter Atemluft, aus dem Mundraum des Patienten auf. Damit handelt es sich bei der Saugvorrichtung 51 zusammen mit dem zweiten Rohr 58 und dem Mundstück 59, 69 zugleich auch um eine Sauganordnung 150 gemäss dem zweiten Aspekt der Erfindung.

In einer hier nicht gezeigten Variante ist das zweite Rohr 58 an einer Gas- und Flüssigl<eitstrennvorrichtung angeschlossen, wie sie in der Regel in Zahnarztpraxen vorgesehen ist, um ein aus dem Mundraum des Patienten abgesogenes Gemisch von Gas, insbesondere Atemluft, und Flüssigkeit zu separieren, um anschliessend das aus dem Gemisch separierte Gas aus der Gas- und Flüssigl<eitstrennvorrichtung in den Saugvorrichtungsinnenraum 53 abzusaugen. In dieser Variante ist das Mundstück 59, 69 über einen Schlauch mit der Gas- und Flüssigl<eitstrennvorrichtung verbunden, sodass das aus dem Mundraum des Patienten abgesogene Gemisch aus Gas und Flüssigkeit erst separiert werden kann und anschliessend das separierte Gas durch das zweite Rohr 58 in die Saugvorrichtung 51 weitergeleitet werden kann.

Figur 6 zeigt eine vereinfachte, schematische Schrägansicht eines Mundstücks 59 für eine zahnärztliche Behandlung gemäss einem weiteren Aspekt der Erfindung. Das Mundstück 59 weist zwei Einlässe 591, 592 auf, wobei ein erster Einlass 591 des Mundstücks 59 mit einem ersten Stutzen 593 des Mundstücks 59 verbunden ist, wobei der erste Stutzen 593 des Mundstücks 59 durch einen Schlauch mit einer Gas- und Flüssigl<eitstrennvorrichtung verbindbar ist, um ein durch den ersten Einlass des Mundstücks aus dem Mundraum des Patienten abgesogenes Gemisch von Gas, insbesondere Atemluft, und Flüssigkeit zu separieren und allenfalls auch quecksilberhaltige flüssige oder feste Verbindungen vom Gas zu trennen, wobei der zweite Einlass 592 des Mundstücks 59 mit einem zweiten Stutzen 594 des Mundstücks 59 verbunden ist, wobei der zweite Stutzen 594 mit dem zweiten Rohr 58 verbindbar ist, um durch den zweiten Einlass 592 quecl<silberbelastete Luft, insbesondere quecl<silberbelastete Atemluft, mit der Saugvorrichtung 51 aus dem Mundraum des Patienten abzusaugen. Dabei ist der erste Einlass 591 des Mundstücks 59 an einem distalen Ende des Mundstücks 59 angeordnet, während der zweite Einlass 592 des Mundstücks 59 um 1 cm vom distalen Ende des Mundstücks 59 in Richtung des ersten und zweiten Stutzens 593, 594 des Mundstücks 59 zurückversetzt angeordnet ist.

Figur 6 zeigt eine schematische Querschnittsdarstellung eines weiteren Mundstücks 69 für eine zahnärztliche Behandlung gemäss dem weiteren Aspekt der Erfindung. Das Mundstück 69 weist zwei Einlässe 691, 692 auf, wobei ein erster Einlass 691 des Mundstücks 69 durch ein erstes Rohr 695 des Mundstücks 69 mit einem ersten Stutzen 693 des Mundstücks 69 verbunden ist, wobei der erste Stutzen 693 des Mundstücks 69 durch einen Schlauch mit einer Gas- und Flüssigl<eitstrennvorrichtung verbindbar ist, um ein durch den ersten Einlass des Mundstücks aus dem Mundraum des Patienten abgesogenes Gemisch von Gas, insbesondere Atemluft, und Flüssigkeit zu separieren und allenfalls auch quecksilberhaltige flüssige oder feste Verbindungen vom Gas zu trennen, wobei der zweite Einlass 692 des Mundstücks 69 über ein zweites Rohr 696 des Mundstücks 69 mit einem zweiten Stutzen 694 des Mundstücks 69 verbunden ist, wobei der zweite Stutzen 594 mit dem im Zusammenhang mit Figur 4 beschriebenen zweiten Rohr 58 verbindbar ist, um durch den zweiten Einlass 692 quecl<silberbelastete Luft, insbesondere quecl<silberbelastete Atemluft, mit der Saugvorrichtung 51 aus dem Mundraum des Patienten abzusaugen. Dabei ist der erste Einlass 691 des Mundstücks 69 an einem distalen Ende des Mundstücks 69 angeordnet, während der zweite Einlass 692 des Mundstücks 69 um 0.5 cm vom distalen Ende des Mundstücks 69 in Richtung des ersten und zweiten Stutzens 693, 694 des Mundstücks 69 zurückversetzt angeordnet ist.

Das erste Rohr 695 und das zweite Rohr 696 des Mundstücks 69 sind querverbindungslos, d.h. weisen keine Verbindung eines Inneren des ersten Rohrs 695 zu einem Inneren des zweiten Rohrs 696 auf. Das erste Rohr 695 des Mundstücks 69 weist eine Krümmung von 20° auf. D.h., ein Verlauf eines Anschlussbereichs des ersten Rohrs 695 an den ersten Einlass 691 ist in einem Winkel von 20° zu einem Verlauf des Anschlussbereichs des ersten Rohrs 695 an den erste Stutzen 693 geneigt.

Der erste Einlass 691 des Mundstücks 69 weist einen Durchmesser von 0.5 cm auf. Weiter ist der erste Einlass 691 des Mundstücks 69 durch um 45° und damit um mindestens 5° zu einem Verlauf des ersten Rohrs 695 des Mundstücks 69 in einem Anschlussbereich des ersten Rohrs 695 des Mundstücks 69 an den ersten Einlass 691 geneigt.

Der zweite Einlass 692 des Mundstücks 69 weist ebenfalls einen Durchmesser von 0.5 cm auf. Weiter ist der zweite Einlass 692 des Mundstücks 69 durch um 2° und damit um mindestens 1° zu einem Verlauf des zweiten Rohrs 696 des Mundstücks 69 in einem Anschlussbereich des zweiten Rohrs 696 des Mundstücks 69 an den zweiten Einlass 692 geneigt. Ausserdem ist der weite Einlass 692 des Mundstücks 69 mit einem Gitter 697 abgedeckt, welches eine Maschengrösse mit einem Durchmesser der Maschenöffnungen von 0.1 mm aufweist. Dieses Gitter 697 ist in einer ersten Variante mit Gold beschichtet. In einer zweiten Variante ist das Gitter 697 mit Selen beschichtet. In einer dritten Variante hingegen ist das Gitter weder mit Gold noch mit Selen beschichtet.

Wie in Figur 4 gezeigt, weist die Saugvorrichtung 51 zusätzlich ein an den ersten oder zweiten Stutzen 55, 57 abschliessbares, drittes Rohr 63 zum Ansaugen von Luft, insbesondere quecksilberbelasteter Raum- und Atemluft, aus Bodennähe auf. Dadurch kann quecl<silberbelastete Luft, welche während einer zahnärztlichen Behandlung entsteht und nicht sogleich aufgefangen und abgesaugt worden ist und daher im Behandlungsraum zum Boden hin abgesunken ist, während oder nach der zahnärztlichen Behandlung durch die Anordnung aus der Bodennähe abgesaugt werden kann. In der Anwendung kann beispielsweise abends das dritte Rohr 63 an den ersten Stutzen 55 angeschlossen und das Ansaugende 64 des dritten Rohrs 63 auf den Boden gelegt werden. Indem die Saugvorrichtung 51 über Nacht im Betrieb gesetzt wird, kann dadurch über Nacht die Luft im Behandlungsraum gefiltert werden. Da dabei das Ansaugende 64 auf dem Boden gelegt wird, wird dabei Luft in Bodennähe angesaugt. Dies ist der Ort, wo sich die Quecl<silberbelastung in der Raumluft aufgrund des Gewichts von Quecksilber am stärksten ansammelt.

Figur 5 zeigt eine vereinfachte, schematische Querschnittsdarstellung des Gehäuses 52 der Saugvorrichtung 51 der in Figur 4 gezeigten Anordnung 50. Dadurch ist der Aufbau des Saugvorrichtungsinnenraums 53 zu erkennen. So sind in Figur 5 der im oberen Bereich des Gehäuses 52 angeordnete erste Stutzen 55 und zweite Stutzen 57 erkennbar. Beide Stutzen 55, 57 führen in eine erste Kammer 60.1 im Saugvorrichtungsinnenraum 53. Unterhalb der ersten Kammer 60.1 ist über einen Durchlass eine zweite Kammer 60.2 mit der ersten Kammer 60.1 verbunden. Weiter ist unterhalb der zweiten Kammer 60.2 über einen weiteren Durchlass eine dritte Kammer 60.3 mit der zweiten Kammer 60.2 verbunden. Dabei sind sowohl die erste Kammer 60.1, die zweite Kammer 60.2 als auch die dritte Kammer 60.3 im Saugvorrichtungsinnenraum 53 angeordnet.

Wie in Figur 5 erkennbar, ist in der zweiten Kammer 60.2 ein Filter 61 angeordnet. Luft, welche durch den ersten Stutzen 55 oder den zweiten Stutzen 57 in die erste Kammer 60.1 angesaugt wird, wird anschliessend durch die zweite Kammer 60.2 und damit durch den Filter 61 in die dritte Kammer 60.3 gesogen und von dort durch den Auslass 54 in die Umgebung ausgelassen. Um diesen Luftstrom zu erzeugen, umfasst die Saugvorrichtung 51 einen Ventilator 62 als Luftbewegvorrichtung, welcher in der dritten Kammer 60.3 angeordnet ist. Anstelle des Ventilators kann die Saugvorrichtung aber auch eine andere Luftbewegvorrichtung wie beispielsweise eine Saugturbine aufweisen. Im Betrieb dient im vorliegenden Ausführungsbeispiel der Ventilator 62 als Luftbewegvorrichtung zum Erzeugen eines Unterdrucks in einem Teil der dritten Kammer 60.3 sowie in der ersten Kammer 60.1 und der zweiten Kammer 60.2. Dadurch wird in einem dem ersten Stutzen 55 und zweiten Stutzen 57 anliegenden Einlassbereich des Saugvorrichtungsinnenraums 53 ein Unterdruck erzeugt, um Luft durch das Rohr 56 und den ersten Stutzen 55 in den Saugvorrichtungsinnenraum 53 zu saugen und durch den Auslass 54 aus dem Saugvorrichtungsinnenraum 53 auszulassen.

Da Luft, welche im Betrieb der Saugvorrichtung 51 durch den Ventilator 62 vom ersten Stutzen 55 oder zweiten Stutzen 57 zum Auslass 54 bewegt wird, durch den Filter 61 hindurchströmt, wird die durch die Stutzen 55, 57 angesaugte Luft gefiltert.

Um die angesaugte, quecl<silberbelastete Luft zu filtern, umfasst der Filter 61 wenigstens einen Aktivkohlefilter oder eine Selen-Filter. In einer Variante dazu umfasst der Filter zudem einen Staubfilter sowie einen biologischen Filter zum Filtern von organischen Strukturen Bakterien, Viren und/oder Pilzsporen aus der Luft. Der Staubfilter sowie der biologische Filter sind dabei Vorfilter. Dabei kann der biologische Filter allgemein zum Filtern von organischen Strukturen aus der Luft ausgebildet sein. Der biologische Filter kann aber auch nur zum Filtern von Bakterien, nur zum Filtern von Viren oder nur zum Filtern von Pilzsporen ausgebildet sein. Genauso kann der biologische Filter aber auch zum Filtern von Bakterien und Viren, zum Filtern von Bakterien und Pilzsporen oder zum Filtern von Viren und Pilzsporen ausgebildet sein. Diese Vorfilter können beispielsweise in einer Einschubkassette eingesetzt sein, welche von ausserhalb des Gehäuses 52 zugänglich ist, um die Vorfilter ersetzen zu können. Der Staubfilter kann dabei insbesondere ein Mikrofilter zum Herausfiltern von Staub und Aerosolen einer Grösse von mehr als 2 µm sein. Bei diesem Staub und diesen Aerosolen handelt es sich insbesondere um I<ompositmaterialien, Acrylate sowie I<eramil<materialien und weiteren Metallen als zahnärztliche Werkstoffe, welche bei der Bearbeitung von Zahnfüllmaterialien entstehen können.

In Figur 5 ist weiter erkennbar, dass in der dritten Kammer 60.3 eine UV-C-Lampe 67 angeordnet ist. Die Luft, welche von der zweiten Kammer 60.2 in die dritte Kammer 60.3 gesogen und von dort durch den Auslass 54 in die Umgebung ausgelassen wird, wird durch diese UV-C-Lampe in der dritten Kammer 60.3 mit UV-C-Licht mit einer Wellenlängenbereich von 200 nm bestrahlt. Dadurch werden organische Strukturen wie Bakterien, Viren und Pilzsporen in der Luft abgetötet, sodass während der zahnärztlichen Behandlung des Patienten das gesundheitliche Risiko sowohl für den Patienten als auch den behandelnden Zahnarzt und weitere anwesende Personen reduziert wird.

In Figur 5 ist zusätzlich erkennbar, dass der erste Stutzen 55 ein erstes Ventil 65 aufweist, welches luftdicht schliessbar ist, um den ersten Stutzen 55 luftdicht zu verschliessen, und welches öffnenbar ist, um Luft durch den ersten Stutzen 55 in den Saugvorrichtungsinnenraum 53, insbesondere in die erste Kammer 60.1, fliessen zu lassen. Weiter ist in Figur 5 erkennbar, dass der zweite Stutzen 57 ein zweites Ventil 66 aufweist, welches luftdicht schliessbar ist, um den zweiten Stutzen 57 luftdicht zu verschliessen, und welches öffnenbar ist, um Luft durch den zweiten Stutzen 57 in den Saugvorrichtungsinnenraum 53, insbesondere in die erste Kammer 60.1, fliessen zu lassen.

Zusammenfassend ist festzustellen, dass eine Auffangvorrichtung zum Auffangen und Absaugen von quecl<silberbelasteter Luft, insbesondere quecl<silberbelasteter Raum- und Atemluft, aus einer Umgebung des Kopfs eines Patienten während einer zahnärztlichen Behandlung des Patienten geschaffen wird, welche ein effizienteres Auffangen und Absaugen von quecl<silberbelasteter Luft, insbesondere quecl<silberbelasteter Raum- und Atemluft, aus der Umgebung des Kopfs des Patienten während der zahnärztlichen Behandlung des Patienten ermöglicht.

## Patentansprüche

1. Auffangvorrichtung (1, 101, 201) zum Auffangen und Absaugen von quecksilberbelasteter Luft, insbesondere quecksilberbelasteter Raum- und Atemluft, aus einer Umgebung eines Kopfs eines Patienten während einer zahnärztlichen Behandlung des Patienten, wobei die Auffangvorrichtung (1, 101, 201) einen Auffangvorrichtungsinnenraum (2, 102, 202), einen mit dem Auffangvorrichtungsinnenraum (2, 102, 202) verbundenen Einlass (3, 103, 203) zum Einlassen von Luft in den Auffangvorrichtungsinnenraum (2, 102, 202) sowie einen mit dem Auffangvorrichtungsinnenraum (2, 102, 202) verbundenen Anschluss (4, 104, 204) zum Anschliessen einer Saugvorrichtung (51) zum Absaugen der Luft aus dem Auffangvorrichtungsinnenraum (2, 102, 202) aufweist,
wobei in einer Arbeitsorientierung der Auffangvorrichtung (1, 101, 201) der Einlass (3, 103, 203) eine nach oben zeigende Öffnung bildet, durch welche Luft von ausserhalb der Auffangvorrichtung (1, 101, 201) in den Auffangvorrichtungsinnenraum (2, 102, 202) absinken kann, wobei die Auffangvorrichtung (1, 101, 201) einen Ausschnitt (5, 105, 205), insbesondere einen Halsausschnitt, aufweist, welcher sich in der Arbeitsorientierung der Auffangvorrichtung (1, 101, 201) seitlich in einer als Ausschnittseite (6, 106, 206) bezeichneten Seite der Auffangvorrichtung (1, 101, 201) befindet und von einer Oberseite (7) der Auffangvorrichtung (1, 101, 201) zu einer Unterseite der Auffangvorrichtung (1, 101, 201) reicht, sodass die Auffangvorrichtung (1, 101, 201) in der Arbeitsorientierung um einen Hals des Patienten angeordnet werden kann, sodass sich der Hals des Patienten zumindest teilweise in dem Ausschnitt (5, 105, 205) befindet,
**dadurch gekennzeichnet, dass**
der Anschluss im Auffangvorrichtungsinnenraum einen Übergangsbereich aufweist, in welchem sich der Anschluss in den Auffangvorrichtungsinnenraum hinein aufweitet, wobei der Übergangsbereich mit einer Abdeckung abgedeckt ist, welche rotationssymmetrisch angeordnete Ausnehmungen aufweist, wobei die Ausnehmungen auf die Abdeckung bezogen dem Zentrum der Abdeckung am nächsten liegende Seitenwände, sowie dem Zentrum der Abdeckung abgewandt liegende Seitenwände aufweist, wobei die Ausnehmungen auf die Abdeckung bezogen im Wesentlichen radial verlaufende Seitenwände aufweist, die jeweils die innenliegende Seitenwand mit der aussenliegenden Seitenwand der jeweiligen Ausnehmung verbinden, wobei die im Wesentlichen radial verlaufenden Seitenwände jeweils zu einer Rotationssymmetrieachse der Anordnung der Ausnehmungen angewinkelt sind und wobei von der Rotationssymmetrieachse der Anordnung der Ausnehmungen zur jeweiligen im Wesentlichen radial verlaufenden Seitenwand betrachtet die im Wesentlichen radial verlaufenden Seitenwände von unten von einer ersten Seite nach oben zur anderen Seite geneigt sind, um im angesogenen Luftstrom ein Wirbel zu erzeugen, damit Luft aus dem Auffangvorrichtungsinnenraum effizienter abgesaugt werden kann.

2. Auffangvorrichtung (1, 101, 201) nach Anspruch 1, **dadurch gekennzeichnet, dass** die Auffangvorrichtung (1, 101, 201) einen Randbereich (10) aufweist, welcher an der Ausschnittseite (6, 106, 206) anliegt, entlang dem Ausschnitt (5, 105, 205), insbesondere entlang dem gesamten Ausschnitt (5, 105, 205), verläuft und sich in der Arbeitsorientierung der Auffangvorrichtung (1, 101, 201) auf der Oberseite (7) der Auffangvorrichtung (1, 101, 201) befindet, wobei sich der Einlass (3, 103, 203) in dem Randbereich (10) entlang dem Ausschnitt (5, 105, 205) erstreckt, sodass sich in der Arbeitsorientierung der Auffangvorrichtung (1, 101, 201) der Einlass (3, 103, 203) um den Hals des Patienten erstreckt, wenn die Auffangvorrichtung (1, 101, 201) um den Hals des Patenten angeordnet ist.

3. Auffangvorrichtung (1, 101, 201) nach Anspruch 1 oder 2, **dadurch gekennzeichnet, dass** der Ausschnitt (5, 105, 205) in der Arbeitsorientierung der Auffangvorrichtung (1, 101, 201) in der Ausschnittseite (6, 106, 206) horizontal entlang der Ausschnittseite (6, 106, 206) gemessen eine Breite von 70 mm bis 190 mm aufweist.

4. Auffangvorrichtung (1, 101, 201) nach einem der Ansprüche 1 bis 3, **dadurch gekennzeichnet, dass** der Ausschnitt (5, 105, 205) in der Arbeitsorientierung der Auffangvorrichtung (1, 101, 201) 100 mm bis 160 mm, insbesondere etwa 140 mm, tief in die Auffangvorrichtung (1, 101, 201) hineinreicht.

5. Auffangvorrichtung (1, 101, 201) nach einem der Ansprüche 1 bis 4, **dadurch gekennzeichnet, dass** sich der Einlass (3, 103, 203) über eine Fläche von mindestens 200 cm² erstreckt.

6. Auffangvorrichtung (101) nach einem der Ansprüche 1 bis 5, **dadurch gekennzeichnet, dass** die Auffangvorrichtung (101) einen mit dem Auffangvorrichtungsinnenraum (102) verbundenen zweiten Einlass (111), insbesondere Atemlufteinlass, zum Einlassen von Luft in den Auffangvorrichtungsinnenraum (102) aufweist, wobei sich in der Arbeitsorientierung der Auffangvorrichtung (101) der zweite Einlass (111) oberhalb des Einlasses (3) befindet.

7. Anordnung (50) mit einer Saugvorrichtung (51) und einer Auffangvorrichtung (1, 101, 201) gemäss einem der Ansprüche 1 bis 6, wobei die Saugvorrichtung (51) wenigstens folgende Elemente umfasst:
a) einen Saugvorrichtungsinnenraum (53),
b) einen mit dem Saugvorrichtungsinnenraum (53) verbundenen Auslass (54) zum Auslassen von Luft aus dem Saugvorrichtungsinnenraum (53) in eine Umgebung der Saugvorrichtung (51),
c) einen mit dem Saugvorrichtungsinnenraum (53) verbundenen ersten Stutzen (55) zum Einlassen von Luft in den Saugvorrichtungsinnenraum (53),
d) ein an dem ersten Stutzen (55) anschliessbares oder angeschlossenes, flexibles oder festes Rohr (56) zum Einlassen von Luft durch das an den ersten Stutzen (55) angeschlossene Rohr (56) und den ersten Stutzen (55) in den Saugvorrichtungsinnenraum (53), und
e) einen eine Luftbewegvorrichtung, insbesondere eine Saugturbine oder einen Ventilator (62), zum Erzeugen eines Unterdrucks zumindest in einem dem ersten Stutzen (55) anliegenden Einlassbereich des Saugvorrichtungsinnenraums (53), um Luft durch das Rohr (56) und den ersten Stutzen (55) in den Saugvorrichtungsinnenraum (53) zu saugen und durch den Auslass (54) aus dem Saugvorrichtungsinnenraum (53) auszulassen,
wobei das Rohr (56) an dem Anschluss (4, 104, 204) der Auffangvorrichtung (1, 101, 201) anschliessbar oder angeschlossen ist, um Luft aus dem Auffangvorrichtungsinnenraum (2, 102, 202) in den Saugvorrichtungsinnenraum (53) abzusaugen.

8. Anordnung (50) nach Anspruch 7, **dadurch gekennzeichnet, dass** die Saugvorrichtung (51) ein luftundurchlässiges Gehäuse (52) aufweist, welches den Saugvorrichtungsinnenraum (53) umschliesst.

9. Anordnung (50) nach Anspruch 8, **dadurch gekennzeichnet, dass** das Gehäuse (52) aus Edelstahl gefertigt ist.

10. Anordnung (50) nach einem der Ansprüche 7 bis 9, **dadurch gekennzeichnet, dass** die Saugvorrichtung (51) einen Filter (61) aufweist, welcher derart im Sauvorrichtungsinnenraum (53) angeordnet ist, dass Luft, welche im Betrieb der Saugvorrichtung (51) durch die Luftbewegvorrichtung vom ersten Stutzen (55) zum Auslass (54) bewegt wird, durch den Filter (61) hindurchströmt.

11. Anordnung (50) nach Anspruch 10, **dadurch gekennzeichnet, dass** der Saugvorrichtungsinnenraum (53) eine erste Kammer (60.1) aufweist, welche den dem ersten Stutzen (55) anliegenden Einlassbereich des Saugvorrichtungsinnenraums (53) bildet, dass der Saugvorrichtungsinnenraum (52) eine zweite Kammer (60.1) aufweist, in welcher der Filter (61) angeordnet ist, und dass der Saugvorrichtungsinnenraum (53) eine dritte Kammer (60.1) aufweist, mit welcher dem Auslass (54) zum Auslassen der Luft aus dem Saugvorrichtungsinnenraum (53) verbunden ist.

12. Anordnung (50) nach einem der Ansprüche 7 bis 11, **dadurch gekennzeichnet, dass** die Saugvorrichtung (51) einen zweiten Stutzen (57) zum Anschliessen eines flexiblen oder festen zweiten Rohrs (58) zum Einlassen von Luft durch das am zweiten Stutzen (57) angebrachte zweite Rohr (58) in den Saugvorrichtungsinnenraum (53) aufweist.

13. Anordnung (50) nach Anspruch 12, **dadurch gekennzeichnet, dass** die Saugvorrichtung (51) ein an den zweiten Stutzen (55) anschliessbares oder angeschlossenes, flexibles oder festes zweites Rohr (58) mit einem Mundstück (59, 69) zum Einführen in einen Mundraum des Patienten während der zahnärztlichen Behandlung des Patienten und zum Absaugen von quecksilberbelasteter Luft, insbesondere quecksilberbelasteter Atemluft, aus dem Mundraum des Patienten aufweist.

14. Anordnung (50) nach Anspruch 13, **dadurch gekennzeichnet, dass** das Mundstück (59, 69) durch ein drittes Rohr an einer Gas- und Flüssigkeitstrennvorrichtung anschliessbar oder angeschlossen ist, um ein aus dem Mundraum des Patienten abgesaugtes Gemisch von Gas, insbesondere Luft, und Flüssigkeit zu separieren, und dass das zweite Rohr (58) an der Gas- und Flüssigkeitstrennvorrichtung anschliessbar oder angeschlossen ist, um das aus dem Gemisch separierte Gas durch das zweite Rohr (58) zum zweiten Stutzen (57) und damit in den Saugvorrichtungsinnenraum (53) zu führen.

15. Anordnung (50) nach einem der Ansprüche 12 bis 14, **dadurch gekennzeichnet, dass** die Saugvorrichtung (51) einen an den ersten oder zweiten Stutzen (55, 57) abschliessbares oder angeschlossenes, flexibles oder festes drittes Rohr (63) zum Ansaugen von Luft, insbesondere quecksilberbelasteter Raum- und Atemluft, aus Bodennähe aufweist.

## Claims

1. Collecting device (1, 101, 201) for collecting and sucking mercury-contaminated air, in particular mercury-contaminated room and breathing air, from an environment of a patient's head during dental treatment of the patient, the collecting device (1, 101, 201) comprising a collecting device interior space (2, 102, 202), an inlet (3, 103, 203) connected to the collecting device interior space (2, 102, 202) for admitting air into the collecting device interior space (2, 102, 202), and a connection (4, 104, 204) connected to the collecting device interior space (2, 102, 202) for connecting a suction device (51) for sucking the air from the collecting device interior space (2, 102, 202),
wherein, in a working orientation of the collecting device (1, 101, 201), the inlet (3, 103, 203) forms an upwardly pointing opening through which air from outside the collecting device (1, 101, 201) can descend into the collecting device interior space (2, 102, 202), wherein the collecting device (1, 101, 201) has a cutout (5, 105, 205), in particular a neck cutout, which, in the working orientation of the collecting device (1, 101, 201) extends from an upper side (7) of the collecting device (1, 101, 201) to a lower side of the collecting device (1, 101, 201), so that the collecting device (1, 101, 201) can be arranged around a neck of the patient in the working orientation, so that the neck of the patient is at least partially located in the cutout (5, 105, 205),
**characterized in that**
the connection in the collecting device interior space has a transition region in which the connection widens into the collecting device interior space, the transition region being covered with a cover which has clearances arranged rotationally symmetrically, the clearances having side walls lying closest to the center of the cover with respect to the cover, and side walls lying away from the center of the cover, the clearances having substantially radially extending side walls with respect to the cover each connecting the inner side wall to the outer side wall of the respective clearance, wherein the substantially radially extending side walls are each angled with respect to an axis of rotational symmetry of the arrangement of the clearances, and wherein, viewed from the axis of rotational symmetry of the arrangement of the clearances with respect to the respective substantially radially extending side wall, the substantially radially extending side walls are inclined from below a first side upwardly toward the other side in order to create a vortex in the aspirated air flow so that air can be sucked out of the collecting device interior space more efficiently.

2. Collecting device (1, 101, 201) according to claim 1, **characterized in that** the collecting device (1, 101, 201) has an edge region (10) which abuts the cutout side (6, 106, 206), runs along the cutout (5, 105, 205), in particular along the entire cutout (5, 105, 205), and is located in the working orientation of the collecting device (1, 101, 201) on the upper side (7) of the collecting device (1, 101, 201), wherein the inlet (3, 103, 203) in the edge region (10) extends along the cutout (5, 105, 205), so that in the working orientation of the collecting device (1, 101, 201), the inlet (3, 103, 203) extends around the neck of the patient when the collecting device (1, 101, 201) is arranged around the neck of the patient.

3. Collecting device (1, 101, 201) according to claim 1 or 2, **characterized in that** in the working orientation of the collecting device (1, 101, 201), the cutout (5, 105, 205) has a width of 70 mm to 190 mm measured horizontally along the cutout side (6, 106, 206).

4. Collecting device (1, 101, 201) according to one of claims 1 to 3, **characterized in that** in the working orientation of the collecting device (1, 101, 201), the cutout (5, 105, 205) extends 100 mm to 160 mm, in particular about 140 mm, deep into the collecting device (1, 101, 201).

5. Collecting device (1, 101, 201) according to any of claims 1 to 4, **characterized in that** the inlet (3, 103, 203) extends over an area of at least 200 cm².

6. Collecting device (101) according to any one of claims 1 to 5, **characterized in that** the collecting device (101) has a second inlet (111), in particular breathing air inlet, connected to the collecting device interior space (102) for admitting air into the collecting device interior space (102), wherein in the working orientation, the second inlet (111) is located above the inlet (3) of the collecting device (101).

7. Arrangement (50) comprising a suction device (51) and a collecting device (1, 101, 201) according to any one of claims 1 to 6, wherein the suction device (51) comprises at least the following elements:
a) a suction device interior space (53),
b) an outlet (54) connected to the suction device interior space (53) for discharging air from the suction device interior space (53) into an environment of the suction device (51),
c) a first connection piece (55) connected to the suction device interior space (53) for inlet of air into the suction device interior space (53),
d) a flexible or fixed tube (56) connectable to or connected to the first nozzle (55) for admitting air through the tube (56) connected to the first nozzle (55) and the first nozzle (55) into the suction device interior space (53); and
e) an air-moving device, in particular a suction turbine or a fan (62), for generating a negative pressure at least in an inlet region of the suction device interior space (53) adjacent to the first nozzle (55) in order to suck air through the pipe (56) and the first nozzle (55) into the suction device interior space (53) and to let it out of the suction device interior space (53) through the outlet (54),
wherein the pipe (56) is connectable or connected to the connection (4, 104, 204) of the collecting device (1, 101, 201) for sucking air from the collecting device interior space (2, 102, 202) into the suction device interior space (53).

8. Arrangement (50) according to claim 7, **characterized in that** the suction device (51) has an air-impermeable housing (52) which encloses the suction device interior space (53).

9. Arrangement (50) according to claim 8, **characterized in that** the housing (52) is made of stainless steel.

10. Arrangement (50) according to any one of claims 7 to 9, **characterized in that** the suction device (51) comprises a filter (61) which is arranged in the suction device interior space (53) in such a way that air which, during operation of the suction device (51), is moved by the air-moving device from the first nozzle (55) to the outlet (54) flows through the filter (61).

11. Arrangement (50) according to claim 10, **characterized in that** the suction device interior space (53) comprises a first chamber (60.1) which forms the inlet area of the suction device interior space (53) adjacent to the first nozzle (55), that the suction device interior space (52) comprises a second chamber (60. 1) in which the filter (61) is arranged, and **in that** the suction device interior space (53) has a third chamber (60.1) to which the outlet (54) for discharging the air from the suction device interior space (53) is connected.

12. Arrangement (50) according to any one of claims 7 to 11, **characterized in that** the suction device (51) comprises a second nozzle (57) for connecting a flexible or fixed second pipe (58) for inlet of air through the second pipe (58) attached to the second nozzle (57) into the suction device interior space (53).

13. Arrangement (50) according to claim 12, **characterized in that** the suction device (51) has a flexible or fixed second tube (58) which can be connected to the second connection piece (55) and has a mouthpiece (59, 69) for introducing into an oral cavity of the patient during dental treatment of the patient and for sucking mercury-contaminated air, in particular mercury-contaminated breathable air, out of the oral cavity of the patient.

14. Arrangement (50) according to claim 13, **characterized in that** the mouthpiece (59, 69) is connectable or connected by a third tube to a gas and liquid separating device for separating a mixture of gas, in particular air, and liquid sucked out of the patient's oral cavity, and **in that** the second tube (58) is connectable or connected to the gas and liquid separating device for guiding the gas separated from the mixture through the second tube (58) to the second nozzle (57) and thus into the suction device interior space (53).

15. Arrangement (50) according to one of claims 12 to 14, **characterized in that** the suction device (51) has a flexible or fixed third tube (63), which can be closed off or connected to the first or second connection piece (55, 57), for sucking in air, in particular mercury-contaminated room air and breathing air, from near the floor.

## Revendications

1. Dispositif collecteur (1, 101, 201), destiné à collecter et à aspirer de l'air chargé de mercure, notamment de l'air ambiant et de l'air respiré chargé de mercure, dans un environnement d'une tête d'un patient pendant un traitement dentaire du patient, le dispositif collecteur (1, 101, 201) comportant un espace intérieur (2, 102, 202) du dispositif collecteur, une entrée (3, 103, 203) reliée avec l'espace intérieur (2, 102, 202) du dispositif collecteur, destinée à faire entrer de l'air dans l'espace intérieur (2, 102, 202) du dispositif collecteur, ainsi qu'un raccord (4, 104, 204) relié avec l'espace intérieur (2, 102, 202) du dispositif collecteur, destiné à raccorder un dispositif d'aspiration (51), pour aspirer l'air hors de l'espace intérieur (2, 102, 202) du dispositif collecteur,
dans une orientation de travail du dispositif collecteur (1, 101, 201), l'entrée (3, 103, 203) constituant un orifice montrant vers le haut, à travers lequel de l'air provenant de l'extérieur du dispositif collecteur (1, 101, 201) peut retomber dans l'espace intérieur (2, 102, 202) du dispositif collecteur, le dispositif collecteur (1, 101, 201) comportant une échancrure (5, 105, 205), notamment une échancrure de cou, laquelle dans l'orientation de travail du dispositif collecteur (1, 101, 201) se situe latéralement dans un côté désigné en tant que côté d'échancrure (6, 106, 206) du dispositif collecteur (1, 101, 201) et va d'un côté supérieur (7) du dispositif collecteur (1, 101, 201) vers un côté inférieur du dispositif collecteur (1, 101, 201), de telle sorte que le dispositif collecteur (1, 101, 201) puisse être placé dans l'orientation de travail autour d'un cou du patient, de manière à ce que le cou du patient se trouve au moins partiellement dans l'échancrure (5, 105, 205),
**caractérisé en ce que**
le raccord comporte dans l'espace intérieur du dispositif collecteur une zone de passage dans laquelle le raccord s'élargit vers l'intérieur de l'espace intérieur du dispositif collecteur, la zone de passage étant recouverte d'un couvercle, lequel comporte des évidements placés de manière symétrique en rotation, en rapport au couvercle, les évidements comportant des parois latérales situées le plus près du centre du couvercle, ainsi que des parois latérales situées à l'opposée du centre du couvercle, en rapport au couvercle, les évidements comportant des parois latérales s'écoulant en direction radiale, qui relient respectivement la paroi latérale située à l'intérieur avec la paroi latérale située à l'extérieur de l'évidement respectif, les parois latérales s'écoulant sensiblement dans la direction radiale étant respectivement coudées vers un axe de symétrie en rotation de la configuration des évidements et, considérées à partir de l'axe de symétrie en rotation de la configuration des évidements vers la paroi latérale, s'écoulant respectivement en direction radiale, les parois latérales s'écoulant sensiblement dans la direction radiale étant inclinées à partir du bas d'un premier côté vers le haut, vers l'autre côté, pour créer un tourbillonnement dans le flux d'air aspiré, pour que de l'air provenant de l'espace intérieur du dispositif collecteur puisse être aspiré de manière plus efficace.

2. Dispositif collecteur (1, 101, 201) selon la revendication 1, **caractérisé en ce que** le dispositif collecteur (1, 101, 201) comporte une zone de bordure (10), laquelle est adjacente au côté d'échancrure (6, 106, 206), le long de l'échancrure (5, 105, 205), notamment le long de l'ensemble de l'échancrure (5, 105, 205) et se trouve, dans l'orientation de travail du dispositif collecteur (1, 101, 201) sur le côté supérieur (7) du dispositif collecteur (1, 101, 201), l'entrée (3, 103, 203) s'étendant dans la zone de bordure (10) le long de l'échancrure (5, 105, 205), de telle sorte que dans l'orientation de travail du dispositif collecteur (1, 101, 201), l'entrée (3, 103, 203) s'étende autour du cou du patient lorsque le dispositif collecteur (1, 101, 201) est placé autour du cou du patient.

3. Dispositif collecteur (1, 101, 201) selon la revendication 1 ou 2, **caractérisé en ce que** dans l'orientation de travail du dispositif collecteur (1, 101,201), mesurée dans le côté d'échancrure (6, 106, 206) à l'horizontale le long du côté d'échancrure (6, 106, 206), l'échancrure (5, 105, 205) présente une largeur de 70 mm à 190 mm.

4. Dispositif collecteur (1, 101, 201) selon l'une quelconque des revendications 1 à 3, **caractérisé en ce que** dans l'orientation de travail du dispositif collecteur (1, 101, 201), l'échancrure (5, 105, 205) pénètre d'une profondeur de 100 mm à 160 mm, notamment d'environ 140 mm à l'intérieur du dispositif collecteur (1, 101, 201).

5. Dispositif collecteur (1, 101, 201) selon l'une quelconque des revendications 1 à 4, **caractérisé en ce que** l'entrée (3, 103, 203) s'étend sur une surface d'au moins 200 cm².

6. Dispositif collecteur (101) selon l'une quelconque des revendications 1 à 5, **caractérisé en ce que** le dispositif collecteur (101) comporte une deuxième entrée (111) reliée avec l'espace intérieur (102) du dispositif collecteur, notamment une entrée d'air respiré, destinée à faire entrer de l'air dans l'espace intérieur (102) du dispositif collecteur, dans l'orientation de travail du dispositif collecteur (101), la deuxième entrée (111) se situant au-dessus de l'entrée (3).

7. Configuration (50), pourvue d'un dispositif d'aspiration (1, 101, 201) selon l'une quelconque des revendications 1 à 6, le dispositif d'aspiration (51) comprenant au moins les éléments suivants :
a) un espace intérieur (53) du dispositif d'aspiration,
b) une sortie (54) reliée avec l'espace intérieur (53) du dispositif d'aspiration, destinée à faire sortir de l'air hors de l'espace intérieur (53) du dispositif d'aspiration vers un environnement du dispositif d'aspiration (51),
c) une première tubulure (55), reliée avec l'espace intérieur (53) du dispositif d'aspiration, destinée à faire entrer de l'air dans l'espace intérieur (53) du dispositif d'aspiration,
d) un tube (56) flexible ou fixe, raccordable ou raccordé sur la première tubulure (55), destiné à faire entrer de l'air à travers le tube (56) raccordé sur la première tubulure (55) et la première tubulure (55) dans l'espace intérieur (53) du dispositif d'aspiration, et
e) un dispositif de circulation d'air, notamment une turbine d'aspiration ou un ventilateur (62), destiné à générer une dépression, au moins dans une première zone d'entrée de l'espace intérieur (53) du dispositif d'aspiration qui est adjacente à la première tubulure (55), pour aspirer de l'air à travers le tube (56) et la première tubulure (55) dans l'espace intérieur (53) du dispositif d'aspiration et le faire sortir à travers la sortie (54) hors de l'espace intérieur (53) du dispositif d'aspiration,
le tube (56) étant raccordable ou raccordé sur le raccord (4, 104, 204) du dispositif collecteur (1, 101, 201), pour aspirer de l'air hors de l'espace intérieur (2, 102, 202) du dispositif collecteur dans l'espace intérieur (53) du dispositif d'aspiration.

8. Configuration (50) selon la revendication 7, **caractérisée en ce que** le dispositif d'aspiration (51) comporte un boîtier (52) étanche à l'air, lequel entoure l'espace intérieur (53) du dispositif d'aspiration.

9. Configuration (50) selon la revendication 8, **caractérisée en ce que** le boîtier (52) est fabriqué en acier inoxydable.

10. Configuration (50) selon l'une quelconque des revendications 7 à 9, **caractérisée en ce que** le dispositif d'aspiration (51) comporte un filtre (61), lequel est placé dans l'espace intérieur (53) du dispositif d'aspiration de telle sorte que de l'air, qui pendant le fonctionnement du dispositif d'aspiration (51) est déplacé à travers le dispositif de circulation d'air de la première tubulure (55) vers la sortie (54) circule à travers le filtre (61).

11. Configuration (50) selon la revendication 10, **caractérisée en ce que** l'espace intérieur (53) du dispositif d'aspiration comporte une première chambre (60.1) qui constitue la zone d'entrée de l'espace intérieur (53) du dispositif d'aspiration qui est adjacente à la première tubulure (55), **en ce que** l'espace intérieur (53) du dispositif d'aspiration comporte une deuxième chambre (60.1) dans laquelle est placé le filtre (61) et **en ce que** l'espace intérieur (53) du dispositif d'aspiration comporte une troisième chambre (60.1), avec laquelle la sortie (54) destinée à faire sortir l'air hors de l'espace intérieur (53) du dispositif d'aspiration est reliée.

12. Configuration (50) selon l'une quelconque des revendications 7 à 11, **caractérisée en ce que** le dispositif d'aspiration (51) comporte une deuxième tubulure (57), destinée à raccorder un deuxième tube (58) flexible ou fixe, pour faire entrer de l'air à travers le deuxième tube (58) monté sur la deuxième tubulure (57) dans l'espace intérieur (53) du dispositif d'aspiration.

13. Configuration (50) selon la revendication 12, **caractérisée en ce que** le dispositif d'aspiration (51) comporte un deuxième tube (58) flexible ou fixe raccordable ou raccordé sur la deuxième tubulure (55), pourvu d'un embout buccal (59, 69), destiné à être introduit dans une cavité buccale du patient pendant le traitement dentaire du patient et à aspirer de l'air chargé de mercure, notamment de l'air respiré chargé de mercure hors de la cavité buccale du patient.

14. Configuration (50) selon la revendication 13, **caractérisée en ce que** l'embout buccal (59, 69) est raccordable ou raccordé par un troisième tube sur un dispositif séparateur de gaz ou de liquide, pour séparer un mélange de gaz, notamment d'air et de liquide, aspiré hors de la cavité buccale du patient et **en ce que** le deuxième tube (58) est raccordable ou raccordé sur le dispositif séparateur de gaz et de liquide, pour guider le gaz séparé hors du mélange à travers le deuxième tube (58) vers la deuxième tubulure (57) et ainsi dans l'espace intérieur (53) du dispositif d'aspiration.

15. Configuration (50) selon l'une quelconque des revendications 12 à 14, **caractérisée en ce que** le dispositif d'aspiration (51) comporte un troisième tube (63) flexible ou fixe, raccordable ou raccordé sur la première ou la deuxième tubulure (55, 57), destiné à aspirer de l'air, notamment de l'air ambiant ou de l'air respiré chargé de mercure à partir du niveau du sol.
